# EUROPÄISCHE PATENTSCHRIFT

(11) **EP 4 064 747 B1**
(45) Veröffentlichungstag und Bekanntmachung des Hinweises auf die Patenterteilung: **06.09.2023**
(21) Anmeldenummer: 21164378.8
(22) Anmeldetag: 23.03.2021
(51) Int. Cl.: H04W 12/088, H04L 9/40, H04W 36/00

(54) **VERFAHREN UND DATENKOMMUNIKATIONSSYSTEM ZUM SELEKTIVEN SYNCHRONISIEREN VON DATENVERBINDUNGS-INFORMATIONEN ZWISCHEN FIREWALLS EINES IP-BASIERTEN KERNNETZES EINES MOBILFUNKNETZES**
METHOD AND DATA COMMUNICATION SYSTEM FOR SELECTIVELY SYNCHRONIZING DATA LINK INFORMATION BETWEEN FIREWALLS OF AN IP-BASED CORE NETWORK OF A MOBILE RADIO NETWORK
SYSTÈME ET PROCÉDÉ DE COMMUNICATION DE DONNÉES DESTINÉS À LA SYNCHRONISATION SÉLECTIVE DES INFORMATIONS DE DONNÉES DE CONNEXION ENTRE LES PARE-FEU D'UN RÉSEAU CENTRAL À BASE D'IP D'UN RÉSEAU MOBILE

(43) Veröffentlichungstag der Anmeldung: 28.09.2022
(73) Patentinhaber: Deutsche Telekom AG, 53113 Bonn (DE)
(72) Erfinder: BERTRAM, Gabriel, 50969 Köln (DE)
(74) Vertreter: Blumbach · Zinngrebe Patentanwälte PartG mbB

(56) Entgegenhaltungen:
- WO-A1-2020/148330
- US-A1- 2003 081 607
- US-A1- 2014 366 119
- Akoz Omer ET AL: "Security Considerations in Mobile IP Networks using Stateful Packet Filtering Firewalls", , 1. April 2010 (2010-04-01), Seiten 218-222, XP055837296, Gefunden im Internet: URL:https://www.researchgate.net/profile/M urat-Zeren/publication/291333136_Security_ Considerations_in_Mobile_IP_Networks_using _Stateful_Packet_Filtering_Firewalls/links /569fc8b508ae21a5642718f8/Security-Conside rations-in-Mobile-IP-Networks-using-Statef ul-Packet-Filtering-Firewalls.pdf [gefunden am 2021-09-02]
- NOKIA ET AL: "Pseudo-CR on Evaluation of Additional Considerations", 3GPP DRAFT; C4-192415 - 29892 EVALUATION OF ADDITIONAL CONSIDERATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , Bd. CT WG4, Nr. Reno, US; 20190513 - 20190517 17. Mai 2019 (2019-05-17), XP051739015, Gefunden im Internet: URL:http://www.3gpp.org/ftp/tsg%5Fct/WG4%5 Fprotocollars%5Fex%2DCN4/TSGCT4%5F91%5FRen o/Docs/C4%2D192415%2Ezip [gefunden am 2019-05-17]

## Beschreibung

Die Erfindung betrifft ein Verfahren und ein Datenkommunikationssystem zum selektiven Synchronisieren von Datenverbindungs-Informationen zwischen Firewalls eines IP-basierten Kernnetzes eines Mobilfunknetzes, wobei insbesondere Datenverbindungs-Informationen zwischen zwei an einem Handover beteiligte Firewalls des IP-basierten Kernnetzes selektiv synchronisiert werden.

Bekannt ist, dass Datenpakete unter Anwendung des GPRS (General Packet Radio Service) -Tunnelprotokolls, kurz GTP-Protokoll genannt, über Datenverbindungen eines Mobilfunknetzes übertragen werden können. Bevor jedoch Daten zwischen einem mobilen Endgerät und einem Ziel übertragen werden können, werden zunächst Datenverbindungen, die auch als GTP-Kontexte bekannt sind, gemäß dem GTP-Protokoll aufgebaut. Die zu den Datenverbindungen gehörenden GTP-Kontextinformationen werden in verschiedenen Netzknoten des Mobilfunknetzes, welche an der Datenübertragung beteiligt sind, gespeichert. Bei einem Mobilfunknetz gemäß dem 2G-oder 3G-Mobilfunkstandard kann es sich hierbei um GPRS-Unterstützungsnetzknoten, wie zum Beispiel SGSN (Serving GPRS Support Nodes) - Netzknoten und GGSN (Gateway GPRS Support Nodes) -Netzknoten handeln, während die GPRS-Unterstützungsknoten eines Mobilfunknetzes gemäß dem 4G-Mobilfunkstandard sogenannte P-GW (Packet Data Network Gateway) -Netzknoten und S-GW (Serving Gateway) -Netzknoten sind. Erwähnt sei, dass die oben aufgeführten Netzknoten eines Mobilfunknetzes logisch oder physikalisch voneinander getrennt in einem IP-basierten Kernnetz des Mobilfunknetzes implementiert sein können. Am Rande sei noch erwähnt, dass der 2G-Mobilfunkstandard auch als GSM (Global System For Mobile Communications) -Standard bekannt ist, der 3G-Mobilfunkstandard als UMTS (Universal Mobile Telecommunications Systems) - Standard bekannt ist, und der 4G-Mobilfunkstandard als LTE (Long Term Evolution) Mobilfunkstandard bekannt ist.

Zur Absicherung von unerwünschten Netzwerkzugriffe auf ein externes Datennetz und zur Abwehr von Angriffen auf GTP-Datenverbindungen kann innerhalb eines Mobilfunknetzes zwischen einem SGSN-Netzknoten und einem GGSN-Netzknoten eine GTP-fähige Firewall und zwischen dem GGSN-Netzknoten und dem externen Datennetz eine weitere Firewall implementiert sein. Die GTP-fähige Firewall detektiert GTP-Tunnelinformationen, während die weitere Firewall zentral eine Liste offener Firewall-Sitzungen verwaltet und, wenn eine Firewall-Session beendet wird, diese Sitzung aus der Liste entfernt. Eine solche GTP-Firewall ist aus der US 7,555,772 B2 bekannt.

Bei dem GTP-Protokoll handelt es sich um ein IP-basiertes Tunnel-Protokoll. Das GTP-Protokoll kann in ein GTP-C-Transportprotokoll zum Transportieren von Kontrollinformationen, die beispielsweise zum Auf- und Abbau eines Tunnels benötigt werden, und in ein GTP-U-Transportprotokoll zur Übertragung von Nutzdaten zwischen einem Endgerät und einer Zieleinrichtung unterteilt werden. Mithilfe des GTP-C-Protokolls werden beim Aufbau einer Datenverbindung entsprechende Steuerungsinformationen zwischen einem mobilen Endgerät und den beteiligten Netzknoten des Mobilfunknetzes ausgetauscht. Die Steuerungsinformationen werden von den beteiligten Netzknoten des Mobilfunknetzes während des Verbindungsaufbaus bearbeitet, wobei für jede Datenverbindung zumindest einige der in einer Steuerungsinformation enthaltenen Informationen zusammen mit einer Tunnel-ID als sogenannte GTP-Kontextinformation in den beteiligten Netznoten und, wenn vorhanden, auch in einer GTP-Firewall gespeichert werden. Die GTP-Kontextinformationen werden von den Netzknoten und der GTP-Firewall so lange benötigt, wie Nutzdaten über die aufgebaute Datenverbindung zwischen einem Endgerät und einem Ziel ausgetauscht werden. Werden zwischen Endgerät und Ziel keine Daten mehr übertragen, so kann das Endgerät einen Verbindungsabbau, einen sogenannten GTP-Kontextabbau initiieren, der bewirkt, dass die in den Netzknoten und, sofern vorhanden, in der Firewall gespeicherten Kontextinformationen gelöscht und somit die verwendeten Ressourcen wieder freigegeben werden.

Will ein Endgerät Nutzdatenpakete über das Mobilfunknetz übertragen, wird vom Endgerät in jedes zu übertragende Nutzdatenpaket die Tunnel-ID eingefügt, die zuvor dem aufgebauten GTP-Tunnel zugeordnet worden ist. Dies geschieht dadurch, dass in den GTP-U-Header eines jeden Nutzdatenpakets die Tunnel-ID eingefügt wird. Die beteiligten Netzknoten des Mobilfunknetzes und, wenn vorhanden, die eingebundene Firewall prüfen dann für jedes empfangene Nutzdatenpaket die im jeweiligen GTP-U-Header enthaltene Tunnel ID gegen eine Liste der gespeicherten GTP-Kontextinformationen so lange, bis die in einem GTP-U-Header enthaltene Tunnel ID mit der Tunnel ID einer gespeicherten GTP-Kontextinformation übereinstimmt. Da die Liste der gespeicherten GTP-Kontextinformationen bei jedem empfangenen Nutzdatenpaket abgearbeitet wird, steigt die Ressourcenbelastung der beteiligten Netzknoten mit zunehmender Anzahl an Datenverbindungen, d.h. GTP-Kontextinformationen, und mit wachsender Anzahl an Nutzdatenpaketen. Hierdurch kann die Bandbreite und Latenz von mobilen Datenverbindungen spürbar beeinträchtigt werden. Diese Situation stellt auch in naher Zukunft eine Herausforderung dar, da mit der Zunahme von M2M (Machine-to.Machine) sowie IoT (Internet of Things)-Geräten auch die Anzahl an Datenverbindungen und damit der zu speichernden GTP-Kontextinformationen drastisch steigen wird. Die Patentschrift US 2003/081607 A1 beschreibt eine Filter-Methode von GTP Paketen.

Der Erfindung liegt daher die Aufgabe zugrunde, ein Verfahren und ein, ein Mobilfunknetz umfassendes Datenkommunikationssystem bereitzustellen, welche bei steigendem mobilen Datenverkehr und Verbindungsübergaben, auch Handover genannt, einen effektiven Schutz gegen Angriffe auf IP-basierte Tunnelverbindungen und gegen unerwünschte Netzzugriffe ermöglichen. Die vorliegende Erfindung wird durch die beigefügten unabhängigen Ansprüche definiert. Vorteilhafte Merkmale sind in den abhängigen Ansprüchen dargelegt.

Ein Kerngedanke der Erfindung kann darin gesehen werden, ein Verfahren sowie ein, ein Mobilfunknetz umfassendes Datenkommunikationssystem zur Verfügung zu stellen, welche dazu ausgebildet sind, insbesondere nach einem Handover, d.h. nach einer Übergabe einer laufenden Datenverbindung, Datenverbindungs-Informationen selektiv zwischen zwei Firewalls eines IP-basierten Kernnetzes des Mobilfunknetzes, welche an dem Handover einer Datenverbindung beteiligt sind, zu synchronisieren bzw. zu auszutauschen. Insbesondere wird die Datenverbindungs-Information der übergebenen Datenverbindung von einer bisherigen Firewall nur der neuen Firewall übergeben.

Gemäß einem vorteilhaften Aspekt wird der Datenverkehr mehrerer mobiler Endgeräte, das können vorzugsweise GTP-fähige Smartphones sein, innerhalb des Mobilfunknetzes beispielsweise in Abhängigkeit von Routingentscheidungen aufgeteilt und über eine verteilte Firewall-Architektur aus mehreren einzelnen Firewalls, die im IP-basierten Kernnetz implementiert sind, zu wenigstens einem externen Ziel geleitet. In einer derart verteilten Firewall-Architektur verarbeitet jede einzelne Firewall vorzugsweise nur den Teil des gesamten durch das IP-basierte Kernnetz geleiteten Datenverkehrs, der von mobilen Endgeräten, die sich in einem ersten geografischen Bereich, der der jeweiligen Firewall zugeordnet worden ist, aufhalten, gesendet wird. Verlässt ein mobiles Endgerät den ersten geografischen Bereich und bewegt sich in einen zweiten geografischen Bereich, erlauben zum Beispiel 3 GPP (3rd Generation Partnership Project)-Mobilfunkstandards einen Handover bzw. eine Datenverbindungsübergabe, bei dem die Verarbeitung der Datenverbindung zum Beispiel von einem SGSN-Netzknoten des IP-basierten Kernnetzes einem anderen SGSN-Netzknoten des IP-basierten Kernnetzes übergeben wird. Ist dem zweiten geografischen Bereich jedoch aufgrund der verwendeten verteilten Firewall-Architektur eine andere Firewall zugeordnet, können Daten nur dann weiterhin über die übergebene Datenverbindung übertragen werden, wenn die Datenverbindungs-Information bezüglich der übergebenen Datenverbindung gezielt von der dem ersten geografischen Bereich zugeordnete Firewall der dem zweiten geografischen Bereich zugeordneten Firewall übergeben wird.

Die Erfindung wird nachfolgend anhand eines Ausführungsbeispiels in Verbindung mit den beiliegenden Zeichnungen näher erläutert. Darin zeigen:
- Figur 1: ein beispielhaftes Datenkommunikationssystem mit einer beispielhaftverteilten GTP-Firewall-Architektur,
- Figur 2: ein Diagramm, welches den zeitlichen Ablauf eines GTP-Verbindungsaufbaus mit anschließender Nutzdatenübertragung zeigt, und
- Figur 3: als Blockschaltbild die in Fig. 1 gezeigten GTP-Firewalls, in denen jeweils eine Liste von unterschiedlichen GTP Kontextinformationen der aktuell von der jeweiligen Firewall überwachten GTP-Tunnelverbindungen gespeichert ist.

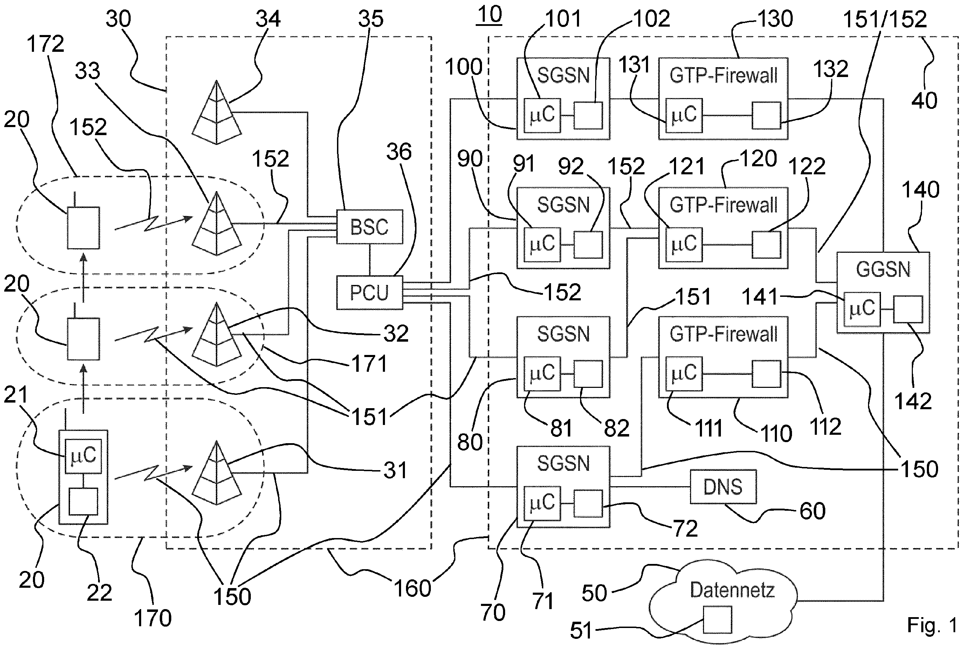

In Figur 1 ist ausschnittsweise ein beispielhaftes Datenkommunikationssystem 10 dargestellt. Das beispielhafte Datenkommunikationssystem 10 kann ein zellulares Mobilfunknetz 160 umfassen, welches gemäß einer 3GPP (3rd Partnership Project)-Spezifikation und insbesondere zur Übertragung von Datenpaketen gemäß einem IP-basierten Tunnel-Protokoll ausgebildet sein kann. Das Mobilfunknetz ist vorzugsweise als ein zellulares Mobilfunknetz implementiert. Bei dem IP-basierten Tunnel-Protokoll handelt es sich beispielsweise um das bekannte GPRS (General Packet Radio Service) - Tunnelprotokoll, nachfolgend nur kurz GTP-Protokoll genannt, welches eingangs kurz beschrieben wurde. Angemerkt sei an dieser Stelle, dass für die nachfolgende Erläuterung des beispielhaften Datenkommunikationssystems 10 vornehmlich, aber lediglich beispielhaft die Terminologie des 2G- und 3G -Mobilfunkstandards und des GTP-Protokolls verwendet wird.

Das Mobilfunknetz 160 kann ein IP-basiertes Kernnetz 40 aufweisen, welches insbesondere dazu ausgebildet sein kann, Daten paketvermittelt gemäß dem IP-Protokoll zu übertragen. Beispielsweise kann das Kernnetz 40 ein GPRS (General Packet Radio Service) -basiertes Kernnetz sein. Das IP-basierte Kernnetz 40 kann eine Vielzahl nicht dargestellter IP-fähiger Router enthalten, die beispielsweise über Kupferleitungen und/oder Glasfaserkabel miteinander verbunden werden können. Die Router sind insbesondere dazu ausgebildet, in an sich bekannter Weise Datenpakete unter Ausführung eines IP-basierten Tunnel-Protokolls und wenigstens eines RoutingProtokolls über mehrere Pfade bzw. IP-basierte Tunnelverbindungen durch das Kernnetz 40 zu einem Ziel zu routet. Beispielsweise kann das IP-basierte Kernnetz 40 bzw. können die Router dazu ausgebildet sein, ein dynamisches Routingprotokoll wie zum Beispiel das Border Gatewy Protokoll (BGP) zur Verteilung von Routinginformationen auszuführen.

Das Kernnetz 40 kann ferner mehrere Netzknoten sowie mehrere dezentral verteilte Firewalls aufweisen, die beispielsweise über die nicht dargestellten Router, welche ein GPRS-basiertes IP-Backbone Netzwerk bilden können, verbunden werden können. Lediglich der einfacheren Darstellung wegen sind nur fünf Netzknoten 70 bis 100 und 140 sowie lediglich drei Firewalls 110 bis 130 in Figur 1 gezeigt. Die Firewalls 110-130 können als Teil einer verteilten Firewall-Architektur innerhalb des Kernnetzes 40 betrachtet werden. Jede der Firewalls 110-130 ist vorzugsweise dazu ausgebildet, in an sich bekannter Weise Nutzdatenverkehr zu untersuchen und entsprechend wenigstens einer gespeicherten Sicherheitsregel zu behandeln. Angemerkt sei, dass der Netzknoten 140 vorzugsweise als ein Zielnetzknoten innerhalb des Kernnetzes 40 fungieren kann. In dem Kernnetz 40 können auch mehrere als Ziel-Netzknoten fungierende Netzknoten implementiert sein. Ferner sei darauf hingewiesen, dass die Netzknoten 70-100 und 140 und die Firewalls 110-130 vorzugsweise jeweils dazu ausgebildet sein können, das IP-basierte Tunnel-Protokoll, insbesondere das GTP-Protokoll, und gegebenenfalls wenigstens ein Routingprotokoll auszuführen. Hierzu kann jeder Netzknoten 70-100 und 140 und jede Firewall 110-130 eine Speichereinrichtung und eine Steuereinheit, beispielsweise einen Mikrocontroller oder Mikroprozessor aufweisen. Die Steuereinrichtungen sind in Figur 1 mit den Bezugszeichen 71-101 und 141 bzw. 111-131 versehen, während die Speichereinrichtungen durch die Bezugszeichen 72-102 und 142 bzw. 112-132 gekennzeichnet sind. Vorzugsweise sind in jedem Netzknoten 70-100 und 140 und in jeder Firewall 110-130 eine Firmware zu Überwachung und Steuerung, das IP-basierte Tunnel-Protokoll, z.B. das GTP-Protokoll und gegebenenfalls wenigstens ein Routing-Protokoll gespeichert, wobei die Steuereinheit jedes Netzknotens und jeder Firewall dazu ausgebildet ist, die gespeicherten Programme auszuführen. Wie später noch ausführlich erläutert wird, können in den Speichereinrichtungen der Netzknoten 70-100 und 140 und in den Speichereinrichtungen der Firewalls 110-130 ferner jeweils eine Liste von Datenverbindungs-Informationen hinsichtlich aktuell bestehender Datenverbindungen bzw. IP-basierter Tunnelverbindungen gespeichert werden. Allerdings unterscheiden sich die Listen von Datenverbindungs-Informationen in Abhängigkeit davon, welche Datenverbindungen von dem jeweiligen Netzknoten und der jeweiligen Firewall betreut werden.

Weiterhin kann das Datenkommunikationssystem 10 wenigstens ein mobiles Endgerät 20 aufweisen. In der Praxis umfasst das Datenkommunikationssystem 10 eine Vielzahl von mobile Endgeräte. Das beispielhafte mobile Endgerät 20 ist insbesondere zur drahtlosen Datenkommunikation über das Mobilfunknetz 160 gemäß einem IP-basierten Tunnelprotokoll, wie zum Beispiel dem GTP-Protokoll, ausgebildet. Es kann zum Beispiel ein GTP-fähiges Smartphone oder ein in einem Fahrzeug integriertes GTP-fähiges Gerät sein, mit dem zum Beispiel eine Maschine-zu-Maschine-Kommunikation über das Mobilfunknetz 160 möglich ist.

Im vorliegenden Beispiel handelt es sich bei dem mobilen Endgerät 20 um ein GTP-fähiges Smartphone, welches eine Steuereinrichtung 21 und eine Speichereinrichtung 22 aufweist. In der Speichereinrichtung 21 kann ein Betriebssystem zum Steuern und Überwachen des Smartphones 40, ein IP-basiertes Tunnel-Protokoll, zum Beispiel das GTP-Protokoll, wenigstens eine Information zum Identifizieren des mobilen Endgeräts 20, wie zum Beispiel eine Mobilfunkteilnehmer-Rufnummer (MSISDN, Mobile Subscriber Integrated Services Digital Number) und/oder eine internationale Mobilfunk-Teilnehmerkennung (IMSI, International Mobile Subscriber Identity), gegebenenfalls der Typ einer drahtlosen Zugangstechnologie (rat (radio access technology) type) und wenigstens eine Information zur Identifizierung eines Ziel-Netzknoten, wie zum Beispiel der Zugangspunktname (APN, Access Point Name) des Netzknotens 140 gespeichert werden. Wie nachfolgend noch näher ausgeführt wird, kann in der Speichereinrichtung 22 auch eine Tunnel-Kennung bzw. eine Tunnel ID abgespeichert werden, die einer Datenverbindung zwischen dem mobilen Endgerät 20 und einem Ziel, beispielsweise dem Datennetz 50, während eines Verbindungsaufbus zugeordnet wird und während der gesamten Dauer der Datenverbindung, also auch nach einem Handover, gültig bleibt. Angemerkt sei, dass die Mobilfunkteilnehmer-Rufnummer (MSISDN, Mobile Subscriber Integrated Services Digital Number), die internationale Mobilfunk-Teilnehmerkennung (IMSI, International Mobile Subscriber Identity), der Typ einer drahtlosen Zugangstechnologie (rat (radio access technology) type), der Zugangspunktname (APN, Access Point Name), sofern verwendet, und die Tunnel ID eine Datenverbindungs-Information, nachfolgend auch als GTP-Kontextinformation genannt, bilden. Die Steuereinrichtung 21 kann als Mikrocontroller oder Mikroprozessor ausgebildet sein.

Das wenigstens eine mobile Endgerät 20 kann dazu ausgebildet sein, unter Ausführung des IP-basierten Tunnel-Protokolls eine Datenverbindungsaufbau-Nachricht zum Aufbauen einer Datenverbindung über das Mobilfunknetz 160 zu einer mit dem Mobilfunknetz 160 verbindbaren Zieleinrichtung bereitzustellen bzw. zu erzeugen und in das Kernnetz 40 zu übertragen. Die Zieleinrichtung kann ein externes Datennetz 50, ein Anwendungsserver 51 des Datennetzes 50, oder ein einzelner externer Rechner sein, die über den Ziel-Netzwerknoten 140 mit dem Kernnetz 40 verbunden werden können Bei dem Datennetz 50 handelt es sich vorzugsweise um ein paketbasiertes Datennetz wie zum Beispiel das Internet. Erwähnt sei an dieser Stelle, dass mehrere externe Datennetze (nicht dargestellt) über den Ziel-Netzknoten 140 oder andere Ziel-Netzknoten mit dem Kernnetz 40 verbunden werden können. Auch ist denkbar, dass das Datennetz 50 über mehrere Ziel-Netzknoten wie zum Beispiel GGSN-Netzknoten mit dem Kernentz 40 verbunden werden können.

Das Mobilfunknetz 160 kann gemäß einem 3 GPP Mobilfunkstandard aufgebaut sein, der neben einer paketvermittelnden Datenübertragung über das Kernnetz 40 auch für die Telefonie genutzt werden kann. Allerdings wird der Teil des Mobilfunknetzes 160, der für die Telefonie bestimmt ist, hierin nicht benötigt und ist deshalb auch nicht dargestellt.

Das beispielhaft in Figur 1 gezeigte Mobilfunknetz 160 kann gemäß dem Global System For Mobile Communications (GSM)-Mobilfunkstandard, der als Mobilfunkstandard der zweiten Generation bekannt ist, implementiert sein. Alternativ kann das Mobilfunknetz 160 gemäß dem Universal Mobile Telecommunications System (UMTS)-Mobilfunkstandard, der auch als 3G-Mobilfunkstandard bekannt ist, implementiert sein. Das Mobilfunknetz 160 kann ferner beispielsweise gemäß dem Long Term Evolution (LTE)-Mobilfunkstandard, der auch als 4G-Mobilfunkstandard bekannt ist, oder auch gemäß dem 5G-Mobilfunkstandard aufgebaut sein. Gemäß dem 5G-Mobilfunkstandard wird auch das GTP Protokoll verwendet. Allerdings werden beim 5G-Mobilfunkstandard Kontroll- und Steuerinformationen nicht gemäß dem GTP-C-Protokoll, sondern als HTTPS Nachrichten übertragen.

Das Mobilfunknetz 160 kann neben dem IP-basierten Kernnetz 40 weiterhin wenigstens ein drahtloses Zugangsnetz 30 aufweisen, über welches mobile Endgeräte wie zum Beispiel das mobile Endgerät 20 Zugang zum Datennetz 50 erhalten können. Das drahtlose Zugangsnetz 30 kann beispielsweise als Mobilfunk-Teilsystem bzw. Base Station Subsystem (BSS) ausgebildet sein.

Das beispielhaft in Figur 1 dargestellte drahtlose Zugangsnetz 30 kann mehrere Basisstationen, auch als Base Transceiver Station (BTS) bezeichnet, sowie wenigstens eine zentrale Steuerungseinheit 35, auch als Base Station Controller (BSC) bezeichnet, aufweisen. Bei dem in Figur 1 gezeigten Beispiel sind vier Basisstationen 31-34 dargestellt, die jeweils einen geografischen Bereich, auch Versorgungsbereich genannt, versorgen. Ein Versorgungsbereich definiert insbesondere die Funkreichweite einer jeweiligen Basisstation, innerhalb derer mobile Endgeräte mit der jeweiligen Basisstation kommunizieren können. Die Versorgungsbereiche können, müssen sich aber nicht überlappen. Wie in Figur 1 zu sehen, deckt die Basisstation 31 einen Versorgungsbereich 170, die Basisstation 32 einen Versorgungsbereich 171 und die Basisstation 33 einen Versorgungsbereich 172 ab. Der besseren Übersichtlichkeit halber ist der Versorgungsbereich der Basisstation 34 nicht dargestellt. Um das beispielhafte Mobilfunknetz 160 auch für eine paketvermittelte Datenübertragung einsetzen zu können, kann der zentralen Steuerungseinheit 35 eine Paket-Steuerungseinheit 36, auch Packet Control Unit (PCU) genannt, zugeordnet sein. Angemerkt sei an dieser Stelle, dass in der Praxis das Mobilfunknetz 160 auch mehrere zentrale Steuerungseinheiten 35 und mehrere Paket-Steuerungseinheiten 36 aufweisen kann. Bei einem Mobilfunknetz gemäß dem 3G-Mobilfunkstandard bilden die zentrale Steuerungseinheit 35 und die Paket-Steuerungseinheit 36 einen sogenannten Funknetzwerk-Controller (RNC, Radio Network Controller). Die Basisstationen 31-34 sind vorzugsweise über Leitungen mit der zentralen Steuerungseinheit 32 verbunden, um über die Luftschnittstelle zum Beispiel vom mobilen Endgerät 20 empfangene Datenpakete der zentralen Steuerungseinheit 35 bzw. der Paket-Steuerungseinheit 36 zur Weiterleitung über das Kernnetz 40 zuzuführen. Das drahtlose mobile Zugangsnetz 30 ist über die Paket-Steuerungseinheit 36 mit den Netzknoten 70-100 des Kernnetzes 40 verbunden. Deshalb können die Netzknoten 70 bis 100 auch als Dienste unterstützende Netzknoten bezeichnet werden. Wie bereits erwähnt, kann Datennetz 50 über den Ziel-Netzknoten 140 mit dem Kernnetz 40 des Mobilfunknetzes 160 verbunden werden. Deshalb kann der Ziel-Netzknoten 140 auch als Gateway-Netzknoten bezeichnet werden. Die Netzknoten 70-100 können mit einem Domain Name Server (DNS) 60 verbunden sein, der Teil des Kernnetzes 40 sein kann. Der Domain Name Server 60 kann allerdings auch außerhalb des Kernnetzes 40 implementiert sein. Eine Aufgabe des DNS Server 60 besteht beispielsweise darin, einem anfragenden Netzknoten, das ist einer der Netzknoten 70-100, zum Beispiel die IP-Adresse des Ziel-Netzknotens 140 mitzuteilen.

Ist das Mobilfunknetz 160, wie beispielhaft in Figur 1 dargestellt, gemäß dem 2G-oder 3G-Mobilfunkstandard implementiert, bilden die Netzknoten, hier die Netzknoten 70-100 und 140 GPRS-Unterstützungsnetzknoten, wobei die Netzknoten 70-100 beispielsweise jeweils als SGSN (Serving GPRS Support Nodes) -Netzknoten und der - Netzknoten 140 als GGSN (Gateway GPRS Support Nodes) -Netzknoten ausgebildet sein können. Ist das Mobilfunknetz 160 beispielsweise gemäß dem 4G-Mobilfunkstandard implementiert, so bilden die Netzknoten, hier die Netzknoten 70-100 und 140 GPRS-Unterstützungsnetzknoten, wobei der Netzknoten 140 als ein P-GW (Packet Data Network Gateway) -Netzknoten ausgebildet ist und die Netzknoten 70-100 jeweils als ein S-GW (Serving Gateway) -Netzknoten ausgebildet wären. Ein S-GW-Netzknoten ist auch als MME (Mobility Management Entity) -Netzknoten bekannt. Erwähnt sei noch, dass die oben aufgeführten Netzknoten des Kernnetzes 40 logisch oder, wie in Figur 1 gezeigt, physikalisch voneinander getrennt implementiert sein können.

Um auch bei deutlich steigendem Datenverkehrsaufkommen eine effiziente Verarbeitung durch das Kernnetz 40 hinsichtlich der Forderung nach einer niedrigen Latenz und ausreichenden Bandbreite gewährleisten zu können, kann der Datenverkehr des Zugangsnetzes 30 gezielt auf die SGSN-Netzknoten 70-100 und die GTP-fähigen Firewalls 110 bis 130 aufgeteilt werden. Hierzu kann zum Beispiel ein Netzwerkbetreiber das Mobilfunknetz 160 derart konfigurieren, dass Datenverkehr aus dem Versorgungsbereich 170 über die Basisstation 31 und die Paket-Steuerungseinheit 36 zum SGSN-Netzknoten 70 geleitet wird, Datenverkehr aus dem Versorgungsbereich 171 über die Basisstation 32 und die Paket-Steuerungseinheit 36 zum SGSN-Netzknoten 80 geleitet wird, Datenverkehr aus dem Versorgungsbereich 172 über die Basisstation 33 und die Paket-Steuerungseinheit 36 zum SGSN-Netzknoten 90 geleitet wird, und Datenverkehr aus dem Versorgungsbereich der Basisstation 34 über die Paket-Steuerungseinheit 36 zum SGSN-Netzknoten 100 geleitet wird. Die entsprechenden Kommunikationspfade sind in Figur 1 mit 150, 151, 152 bzw. 153 gekennzeichnet. Mit anderen Worten: Der Versorgungsbereich 170 wird beispielsweise dem SGSN-Netzknoten 70 zugeordnet, der Versorgungsbereich 171 wird beispielsweise dem SGSN-Netzknoten 80 zugeordnet, der Versorgungsbereich 172 wird beispielsweise dem SGSN-Netzknoten 90 und der Versorgungsbereich der Basisstation 34 wird beispielsweise dem SGSN-Netzknoten 100 zugeordnet. Zu diesem Zweck können in der Paket-Steuerungseinheit 36 die IP-Adressen der SGSN-Netzknoten 70 bis 100 gespeichert werden. Ferner kann die Paket-Steuerungseinheit 36 dazu ausgebildet sein, anhand eines empfangenen Datenpakets zu erkennen, von welcher Basisstation das jeweilige Datenpaket übertragen wurde, und dieses Datenpaket anschließend zu dem entsprechenden SGSN-Netzknoten weiterleiten. Ferner kann der Netzbetreiber das Kernnetz 40 derart konfigurieren, dass am SGSN-Netzknoten 70 ankommende Datenpakete zur Firewall 110, am SGSN-Netzknoten 80 und am Netzknoten 90 ankommende Datenpakete jeweils zur Firewall 120 und am SGSN-Netzknoten 100 ankommende Datenpakete zur Firewall 130 weitergeleitet werden. Mit anderen Worten: Die Firewall 110 ist beispielsweise dem SGSN-Netzknoten 70 zugeordnet, die Firewall 120 ist beispielsweise den SGSN-Netzknoten 80 und 90 zugeordnet, während die Firewall 130 beispielsweise dem SGSN-Netzknoten 100 zugeordnet ist. Das bedeutet, dass jede GTP-fähige Firewall je nach Konfiguration wenigstens einem der SGSN-Netzknoten 70-100 zugeordnet werden kann. Diese Zuordnungen können dadurch erreicht werden, dass der Netzbetreiber zum Beispiel in jedem SGSN-Netzknoten die IP-Adresse der diesem SGSN-Netzknoten zugeordneten Firewall gespeichert wird. Angemerkt sei, dass die beispielhaft beschriebenen Zuordnungen zwischen SGSN-Netzknoten und Versorgungsbereichen bzw. Basisstationen und zwischen SGSN-Netzknoten und Firewalls in der Regel nicht statisch, sondern dynamisch mithilfe eines geeigneten Routing-Algorithmus eingerichtet werden können. Das bedeutet, dass die Zuordnung zwischen den SGSN-Netzknoten und den Firewalls vorzugsweise durch Routingentscheidungen bestimmt wird. Zwischen einem SGSN-Netzknoten und einer Firewall ist in der Regel daher mindestens ein IP-Router angeordnet. Die Verbindung zwischen einem SGSN-Netzknoten und einer Firewall wird daher vorzugsweise mithilfe eines dynamischen Routingprotokolls hergestellt, wobei die IP-Adresse einer Firewall nicht zwingend auf dem SGSN-Netzknoten, welcher der Firewall zugeordnet werden soll, konfiguriert werden muss. Die Firewall befindet sich in diesem Fall einfach in dem Kommunikationspfad zwischen der Quelle, d.i. beispielsweise das mobile Endgerät 20, und einer Zieleinrichtung, d.i. beispielsweise der Anwendungsserver 51 im Datennetz 50. Ein Zuordnungsmechanismus ist jedoch nicht Gegenstand der Anmeldung. Wichtig ist nur, dass eine Zuordnung zwischen den SGSN-Netzknoten und Versorgungsbereichen bzw. Basisstationen und zwischen den SGSN-Netzknoten und Firewalls besteht, um Datenverkehr verteilt und dezentral im Kernnetz 40 verarbeiten und routen zu können. Angemerkt sei an dieser Stelle noch, dass jede der Firewalls 110 bis 130 dazu ausgebildet ist, Sicherheitsregeln auszuführen, um prüfen zu können, ob ankommende Datenpakte weitergeleitet werden dürfen oder verworfen werden müssen. Eine beispielhafte Sicherheitsregel kann definieren, dass jede GTP-fähige Firewall die in jedem Datenpaket enthaltene Tunnel ID auslesen und gegenüber den in der jeweiligen Firewall gespeicherten Tunnel-Kennungen auf Übereinstimmung prüfen kann.

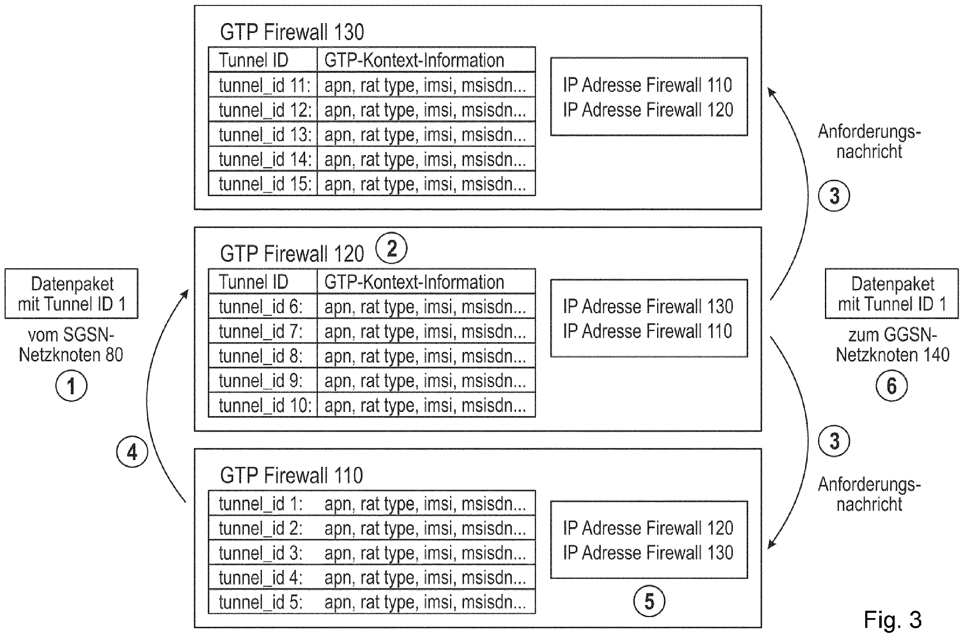

Anzumerken ist noch, dass vorteilhafterweise in jeder GTP-fähigen Firewall die IP-Adressen der anderen GTP-fähigen Firewalls gespeichert sein können. So sind beispielsweise in der Firewall 110 die IP- Adressen der Firewall 120 und 130 gespeichert, in der Firewall 120 die IP-Adressen der Firewalls 110 und 130 und in der Firewall 130 die IP-Adressen der Firewalls 110 und 120. Dies ist in Figur 3 dargestellt. Die Liste der in jeder GTP-fähigen Firewall gespeicherten IP-Adressen kann manuell von einem Netzbetreiber konfiguriert werden. Auf diese Weise sind die GTP-fähigen Firewalls in der Lage, untereinander Daten, insbesondere Datenverbindungs-Informationen, nach einem Handover oder während eines Handovers selektiv zu synchronisieren.

Ferner sei angemerkt, dass das Mobilfunknetz 160 in an sich bekannter Weise dazu ausgebildet sein kann, einen Handover- bzw. einen Datenverbindungsübergabebetrieb zu ermöglichen. Dies kann vorzugsweise dadurch erreicht werden, dass die Verarbeitung einer bestehenden Datenverbindung von einem bisherigen SGSN-Netzknoten, zum Beispiel dem SGSN-Netzknoten 70 des IP-basierten Kernnetzes 40 einem neuen SGSN-Netzknoten, beispielsweise dem SGSN-Netzknoten 80 des IP-basierten Kernnetzes 40, und von einer bisherigen Basisstation, beispielsweise der Basisstation 31, einer neuen Basisstation, beispielsweise der Basisstation 32, übergeben wird. Entsprechende Technologien sind beispielsweise in den 3GPP (3rd Generation Partnership Project)- Mobilfunkstandards definiert. Beispielsweise sind in den 3GPP-Spezifikationen Signalisierungsnachrichten definiert, die dafür sorgen, dass bei einem Wechsel der SGSN-Netzknoten infolge eines Handovers die entsprechenden Datenverbindungs-Informationen bezüglich der übergebenen Datenverbindung vom bisherigen SGSN-Netzknoten zum neuen SGSN-Netzknoten übertragen werden. Solche Nachrichten sind zum Beispiel Update PDP Context Request/Response, Modify Bearer Request/Response und Modify Session Request/Reponse. Die Übergabe einer laufenden Datenverbindung wird zum Beispiel unter Ansprechen auf ein vorbestimmtes Ereignis vom Mobilfunknetz 160 durchgeführt. Ein vorbestimmtes Ereignis kann beispielsweise darin bestehen, dass das mobile Endgerät 20 bzw. dessen Nutzer sich von dem Versorgungsbereich 170 der Basisstation 31 in den Versorgungsbereich 171 der Basisstation 32 bewegt, dass die Übertragungsqualität der Funkstrecke zwischen dem mobilen Endgerät 20 und der Basisstation 32 besser ist als zwischen dem mobilen Endgerät 20 und der Basisstation 31, oder dass die Basisstation 31 aktuell überlastet ist.

Nachfolgend wird die Funktionsweise des beispielhaften Datenkommunikationssystems 10 in Verbindung mit den Figuren 1 bis 3 näher erläutert.

Zunächst werden die Schritte zum Aufbauen einer Datenverbindung, zum Erzeugen von Datenverbindungs-Informationen und zum Speichern von Datenverbindungs-Information in den SGSN-Netzknoten 70-100, dem GSGN-Netzknoten 140 sowie in den Firewalls 110-130 allgemein erläutert. Diese Schritte umfassen beispielsweise das a) Aufbauen, durch Initiierung des mobilen Endgeräts 20, einer Datenverbindung über das Mobilfunknetz 160 unter Verwendung des IP-basierten Tunnel-Protokolls zu einer Zieleinrichtung, z.B. dem Datennetz 50 oder dem Anwendungsserver 51, wobei das Aufbauen der Datenverbindung folgende Schritte umfasst:
a1) Aufbauen einer IP-basierten Tunnelverbindung von einem ersten Netzknoten des IP-basierten Kernnetzes 40, z.B. dem SGSN-Netzknoten 70, welcher dem mobilen Endgerät 20 aktuell zugeordnet ist, über eine erste, dem ersten Netzknoten 70 zugeordnete Firewall 110 zu einem Ziel-Netzknoten des IP-basierten Kernnetzes 40, z.B. dem GSGSN-Netzknoten 140, welcher mit der Zieleinrichtung 50, 51 verbindbar ist, wobei der erste Netzknoten 70 einem ersten Versorgungsbereich 170 bzw. einer ersten Basisstation 31 des Mobilfunknetzes 160 zugeordnet ist;
a2) Zuordnen der IP-basierten Tunnelverbindung einer eindeutigen Tunnel-Kennung, z.B. "tunnel_id 1", und zwar insbesondere durch das Kernnetz 40 bzw. durch den ersten Netzknoten 70 und/oder dem Ziel-Netzknoten 140;
a3) Speichern einer Datenverbindungs-Information, welche die in Schritt a2) der IP-basierten Tunnelverbindung zugeordnete Tunnel-Kennung enthält, in dem mobilen Endgerät 20, dem ersten Netzknoten 70, der ersten Firewall 110 und dem Ziel-Netzknoten 140.

Vorzugsweise ist hierzu die Steuereinrichtung 21 des mobilen Endgerät 20 dazu ausgebildet, unter Ausführung des in der Speichereinrichtung 22 abgelegten IP-basierten Tunnel-Protokolls, d.i. beispielsweise das GTP Protokoll, und unter Verwendung der Information zum Identifizieren eines Ziel-Netzknotens, z.B. der Zugangspunkt-Name des GGSN Netzknoten 140, das mobile Endgerät 20 zu veranlassen, den Aufbau einer Datenverbindung über das Mobilfunknetz 160 zu einer Zieleinrichtung, z.B. dem Anwendungsserver 51, einzuleiten. Das IP-basierte Kernnetz 40 kann dazu ausgebildet sein, der IP-basierten Tunnelverbindung eine eindeutige Tunnel-Kennung, z.B. tunnel_id 1, zuzuordnen und das Speichern einer Datenverbindungs-Information, welche die der IP-basierten Tunnelverbindung zugeordnete Tunnel-Kennung enthält, in dem mobilen Endgerät 20, dem ersten Netzknoten 70, der ersten Firewall 110 und dem Ziel-Netzknoten 140 zu veranlassen.

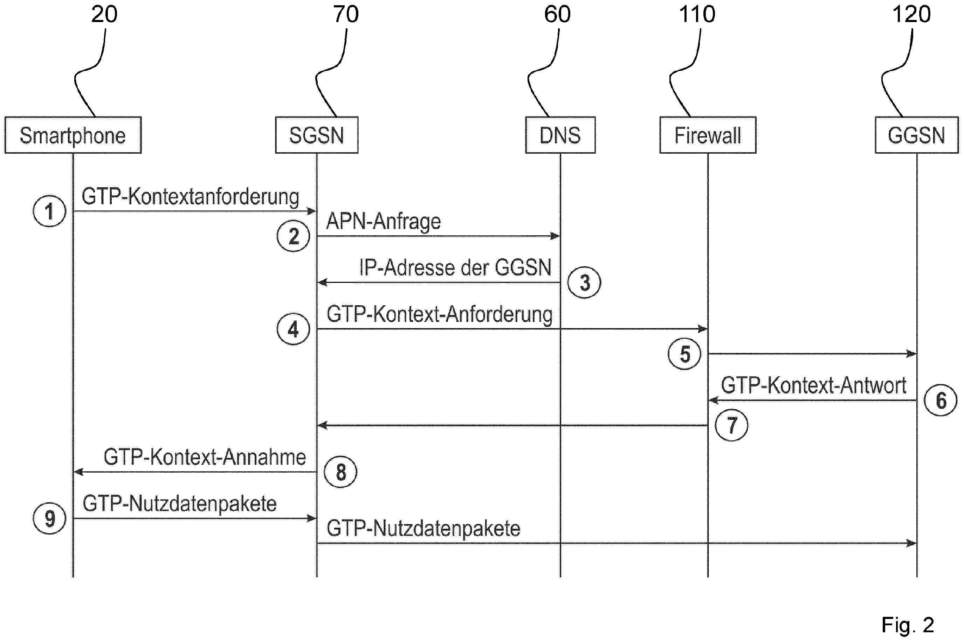

Nunmehr wird auf Figur 2 Bezug genommen, um einen beispielhaften konkreten Verbindungsaufbau zu erläutern. Angenommen sei, dass sich das Smartphone 20 aktuell im Versorgungsbereich 170 der Basisstation 31 aufhält.

Das Smartphone 20 kann dazu ausgebildet sein, zunächst unter Ausführung des GTP-Protokolls eine Datenverbindungsaufbau-Nachricht, in Figur 2 auch GTP-Kontextanforderung genannt, zum Aufbauen einer Datenverbindung über das Mobilfunknetz 160 beispielsweise zu dem mit dem Mobilfunknetz 160 verbundenen Datennetz 50 bzw. dem Anwendungsserver 51 zu erzeugen bzw. bereitzustellen. Die bereitgestellte Datenverbindungsaufbau-Nachricht kann einen Zugangspunkt-Namen, auch Access Point Name (APN) genannt, enthalten, der zum Beispiel den GGSN-Netzknoten 140 benennt, über den das Smartphone 20 eine Datenverbindung zum Datennetz 50 aufbauen möchte. Darüber hinaus kann die Datenverbindungsaufbau-Nachricht eine internationale Mobilfunk-Teilnehmerkennung des mobilen Endgeräts 20, auch International Mobile Subscriber Identity (IMSI) genannt), und /oder eine Mobilfunk-Rufnummer des mobilen Endgeräts 20, auch Mobile Subscriber Integrated Services Digital Network Number (MSISDN) genannt, und/oder den Typ der zu verwendenden drahtlosen Zugangstechnologie, auch Radio Access Technologie (RAT) -Type genannt, enthalten. Aus der Mobilfunk-Teilnehmerkennung IMSI kann beispielsweise auf das Endgerät 20 geschlossen werden, welches die Datenverbindungsaufbau-Nachricht erzeugt hat. So könnte eine IMSI-Teilnehmerkennung beispielsweise darauf hinweisen, dass das mobile Endgerät 20 ein Smartphone ist.

Die Datenverbindungsaufbau-Nachricht wird nunmehr in Schritt 1 vom Smartphone 20 über die Basisstation 31 des drahtlosen Zugangsnetzes 30 und gemäß der zuvor eingerichteten Konfiguration über die Paket-Steuerungseinheit 36 zum SGSN-Netzknoten 70 des Kernnetzes 40 übertragen. Der SGSN-Netzknoten 70 kann dazu ausgebildet sein, den Zugangspunkt-Namen aus der empfangenen Datenverbindungsaufbau-Nachricht auszulesen und in Schritt 2 unter Verwendung der IP-Adresse des Domain-Servers 60 eine entsprechende APN-Anfrage an den Domainname Server 60 zu richten. Der Domainname Server 60 ist in an sich bekannter Weise dazu ausgebildet, die IP-Adresse, die der APN-Anfrage zugeordnet ist, herauszufinden. Im vorliegenden Beispiel ist das die IP-Adresse des GGSN-Netzknoten 140. Der Domain Name Server 60 sendet dann in Schritt 3 die IP-Adresse des GGSN-Netzknotens 140 zum SGSN-Netzknoten 70. Unter Verwendung der empfangenen IP-Adresse und der in der Speichereinrichtung 72 abgelegten IP-Adresse der Firewall 110 sendet der SGSN-Netzknoten 70 die vom Smartphone 20 empfangene Datenverbindungsaufbau-Nachricht, d.i. die GTP-Kontextanforderung, in Schritt 4 weiter zur Firewall 110, die wiederum die Datenverbindungsaufbau-Nachricht in Schritt 5 zum GGSN-Netzknoten 140 weiterleitet. In Schritt 6 überträgt der GGSN-Netzknoten 140 eine GTP-Kontextantwort zur Firewall 110, die wiederum in Schritt 7 die GTP-Kontextantwort zum SGSN-Netzknoten 70 weiterleitet. Je nach Implementierung kann beispielsweise das Kernnetz 40, und insbesondere der SGSN-Netzknoten 70, und/oder die Firewall 110 und/oder der GGSN-Netzknoten 140 während der Ausführung der Schritte 4 bis 7 unter Ansprechen auf die empfangene GTP-Kontextanforderung des Smartphones 20 eine IP-basierte Tunnelverbindung zwischen dem SGSN-Netzknoten 70, der GTP-fähigen Firewall 110 und dem GGSN-Netzknoten 140 innerhalb des Kernnetzes 40 aufbauen. Im vorliegenden Beispiel wird somit zwischen dem SGSN-Netzknoten 70, der GTP-fähigen Firewall 110 und dem GGSN-Netzknoten 140 eine GTP-Tunnelverbindung, welche dem Smartphone 20 zugeordnet ist, aufgebaut. Ferner ordnet das Kernnetz 40 und insbesondere der SGSN-Netzknoten 70 und/oder der GGSN-Netzknoten 140 der zwischen dem SGSN-Netzknoten 70 und dem GGSN-Netzknoten 140 aufgebauten GTP-Tunnelverbindung, die dem Smartphone 20 zugeordnet ist, eine eindeutige Tunnel ID, z.B. die tunnel_id 1 zu. Dies kann beispielsweise dadurch erreicht werden, dass der GGSN-Netzknoten 140 unter Ansprechen auf die vom SGSN-Netzknoten 70 bzw. von der Firewall 110 empfangene GTP-Kontextanforderung die entsprechende eindeutige Tunnel ID erzeugt, die in der GTP-Kontextantwort in Schritt 6 zur Firewall 110 und von dort zum SGSN-Netzknoten 70 übertragen wird. Der SGSN-Netzknoten 70, die Firewall 110 und der GGSN-Netzknoten 140 sind vorzugsweise ferner jeweils dazu ausgebildet, die von ihnen empfangene GTP-Kontextanforderung zumindest teilweise zusammen mit der dieser GTP-Kontextanforderung eindeutig zugeordnet Tunnel-Kennung "tunnel_id 1", die zuvor der aufgebauten GTP Tunnelverbindung zugeordnet worden ist, als eine Datenverbindungs-Information bzw. als eine GTP Kontextinformation in der jeweiligen Speichereinrichtung 72, 112 bzw. 142 zu speichern. Die der Datenverbindung zugeordnete Tunnel-Kennung "tunnel_id 1" kann zum Beispiel im GGSN-Netzknoten 140 erzeugt und in der GTP-Kontext-Antwort übertragen werden. Die Firewall 110 und der SGSN-Netzknoten 70 können dazu ausgebildet sein, die in der GTP-Kontext-Antwort enthaltenen Tunnel-Kennung "tunnel_id 1" auszulesen und abzuspeichern.

Angenommen sei, dass der SGSN-Netzknoten 70 dazu ausgebildet ist, in Schritt 8 eine GTP-Kontextannahme-Nachricht, die die Tunnel-Kennung "tunnel_id 1", die der zuvor aufgebauten GTP-Tunnelverbindung zugeordnet worden ist, enthält, zum Smartphone 20 zu übertragen. Die Tunnel ID "tunnel_id 1"kann von dem Smartphone 20 aus der empfangenen GTP-Kontextannahme-Nachricht ausgelesen und in der Speichereinrichtung 22 des Smartphones 20 abgelegt werden. Nach Abschluss des Verbindungsaufbaus ist in der Speichereinrichtung 71 des SGSN-Netzknotens 70, in der Speichereinrichtung 112 der Firewall 110 und in der Speichereinrichtung 142 des GGSN-Netzknoten 140 jeweils die gleiche Datenverbindungs-Information, die jeweils u.a. die Tunnel-Kennung "tunnel_id 1" enthält, gespeichert. Die Tunnel-Kennung "tunnel_id 1" bleibt solange gültig, wie die unter Steuerung des Smartphones 20 aufgebaute Datenverbindung bzw. die GTP-Tunnelverbindung besteht, also auch während eines Handovers.

Angenommen sei nunmehr, dass auf die oben detailliert beschrieben Weise
i) eine Vielzahl von weiteren Datenverbindungen (2-5) von mobilen Endgeräten, die sich aktuell im Versorgungsbereich 170 der Basisstation 31 aufhalten, gemäß der beispielhaft vorgegebenen Konfiguration über den SGSN-Netzknoten 70 und die Firewall 110 zum GGSN-Netzknoten 140 aufgebaut worden sind,
ii) eine Vielzahl von Datenverbindungen (6-10) von mobilen Endgeräten, die sich aktuell im Versorgungsbereich 171 der Basisstation 32 oder im Versorgungsbereich 172 der Basisstation 33 aufhalten, gemäß der beispielhaft vorgegebenen Konfiguration über den SGSN-Netzknoten 80 oder den SGSN-Netzknoten 90, die Firewall 120 zum GGSN-Netzknoten 140 aufgebaut worden sind, und
iii) eine Vielzahl von Datenverbindungen (11-15) von mobilen Endgeräten, die sich aktuell im Versorgungsbereich der Basisstation 34 aufhalten, gemäß der beispielhaft vorgegebenen Konfiguration über den SGSN-Netzknoten 100 und die Firewall 130 zum GGSN-Netzknoten 140 aufgebaut worden sind.

Der Einfachheit halber sei angenommen, dass sich in jedem Versorgungsbereich der Basisstationen 31-34 jeweils 5 mobile Endgeräte aktuell aufhalten, und jedes mobile Endgerät nur eine Datenverbindung aufgebaut hat.

Die hierbei während des jeweiligen Datenverbindungsaufbaus erzeugten Datenverbindungs-Informationen einschließlich der jeweiligen Tunnel-Kennungen können analog der Erläuterung betreffend die Tunnel-Kennung "tunnel_id 1" beispielsweise wie folgt in den Netzknoten und Firewalls abgespeichert werden:

### SGSN-Netzknoten 70 und GTP-fähige Firewall 110:

Tunnel_ID 1: APN des GGSN 140, rat type, IMSI/MSISDN des Endgeräts 20
Tunnel_ID 2: APN des GGSN 140, rat type, IMSI/MSISDN des jeweiligen Endgeräts
Tunnel_ID 3: APN des GGSN 140, rat type, IMSI/MSISDN des jeweiligen Endgeräts
Tunnel_ID 4: APN des GGSN 140, rat type, IMSI/MSISDN des jeweiligen Endgeräts
Tunnel_ID 5: APN des GGSN 140, rat type, IMSI/MSISDN des jeweiligen Endgeräts

### SGSN-Netzknoten 80:

Tunnel_ID 6: APN des GGSN 140, rat type, IMSI/MSISDN des jeweiligen Endgeräts
Tunnel_ID 7: APN des GGSN 140, rat type, IMSI/MSISDN des jeweiligen Endgeräts
Tunnel_ID 8: APN des GGSN 140, rat type, IMSI/MSISDN des jeweiligen Endgeräts

### SGSN-Netzknoten 90

Tunnel_ID 9: APN des GGSN 140, rat type, IMSI/MSISDN des jeweiligen Endgeräts
Tunnel_ID 10: APN des GGSN 140, rat type, IMSI/MSISDN des jeweiligen Endgeräts

### GTP-Firewall 120:

Tunnel_ID 6: APN des GGSN 140, rat type, IMSI/MSISDN des jeweiligen Endgeräts
Tunnel_ID 7: APN des GGSN 140, rat type, IMSI/MSISDN des jeweiligen Endgeräts
Tunnel_ID 8: APN des GGSN 140, rat type, IMSI/MSISDN des jeweiligen Endgeräts
Tunnel_ID 9: APN des GGSN 140, rat type, IMSI/MSISDN des jeweiligen Endgeräts
Tunnel_ID 10: APN des GGSN 140, rat type, IMSI/MSISDN des jeweiligen Endgeräts

### SGSN-Netzknoten 100 und GTP-Firewall 130:

Tunnel_ID 11: APN des GGSN 140, rat type, IMSI/MSISDN des jeweiligen Endgeräts
Tunnel_ID 12: APN des GGSN 140, rat type, IMSI/MSISDN des jeweiligen Endgeräts
Tunnel_ID 13: APN des GGSN 140, rat type, IMSI/MSISDN des jeweiligen Endgeräts
Tunnel_ID 14: APN des GGSN 140, rat type, IMSI/MSISDN des jeweiligen Endgeräts
Tunnel_ID 15: APN des GGSN 140, rat type, IMSI/MSISDN des jeweiligen Endgeräts

Im GGSN-Netzknoten 140 können die Datenverbindungs-Informationen aller 15 laufenden Datenverbindungen gespeichert werden. Figur 3 zeigt die entsprechenden Listeneinträge in den GTP-fähigen Firewalls 110-130. Angenommen sei der Einfachheit halber, Jedes mobile Endgerät speichert zumindest die Tunnel-Kennung der Datenverbindung, deren Aufbau das jeweilige mobile Endgerät veranlasst hat.

Wir kehren nunmehr noch einmal zu dem in Figur 2 gezeigten Zeitdiagramm zurück. Sobald die Datenverbindung zwischen dem Smartphone 20 und dem Datennetz 50 über das Mobilfunknetz 160 und insbesondere eine GTP-Tunnelverbindung vom SGSN-Netzknoten 70 über die Firewall 110 zum GGSN-Netzknoten 140 aufgebaut worden ist, kann das Smartphone 20 Nutzdatenpakete, insbesondere GTP-U- Nutzdatenpakete über das Mobilfunknetz 160, d. h. beispielsweise über die Basisstation 31, die Paket-Steuerungseinheit 33, den SGSN-Netzknoten, die Firewall 110 und den GGSN-Netzknoten 140 zum Datennetz 50 übertragen. Anzumerken ist, dass in jedem vom Smartphone 20 bereitgestellten bzw. erzeugten GTP-U-Nutzdatenpaket die der GTP-Tunnelverbindungen zugeordnete Tunnel-Kennung "tunnel_id 1" im GTP-U-Header mit übertragen wird.

Angemerkt sei weiter, dass jeder SGSN-Netzknoten 70-100 und der GGSN-Netzknoten 140 je nach Implementierung dazu ausgebildet sein können, die in jedem empfangenen Nutzdatenpaket enthaltene Tunnel ID auszulesen und die Liste gespeicherter Datenverbindungs-Informationen so lange zu durchsuchen, bis die in einer Datenverbindungs-Information enthaltene Tunnel ID mit der im jeweiligen Nutzdatenpaket enthaltene Tunnel ID übereinstimmt. Dieses Prozedere sowie die Speicherung von Datenverbindungs-Informationen in den SGSN-Netzknoten 70-100 und dem GGSN-Netzknoten sind jedoch nur optional.

Die GTP-fähigen Firewalls 110-130 sind jeweils dazu ausgebildet, die in jedem empfangenen Nutzdatenpaket enthaltene Tunnel ID auszulesen und zu prüfen, ob in der Liste gespeicherter Datenverbindungs-Informationen eine Datenverbindungs-Information mit einer Tunnel ID gespeichert ist, die mit der im jeweiligen Nutzdatenpaket enthaltene Tunnel ID übereinstimmt. Gemäß einer beispielhaften Sicherheitsregel, die in jeder Firewall 110-130 gespeichert sein kann, kann vorteilhafterweise gefordert werden, dass die jeweilige Firewall ein empfangenes Nutzdatenpaket zumindest nur dann weiterleiten darf, wenn in der Firewall eine Datenverbindungs-Information gespeichert ist, die eine Tunnel-Kennung enthält, welche mit der in dem empfangenen Nutzdatenpaket enthaltenen Tunnel-Kennung übereinstimmt. Wie diese Sicherheitsregel auch bei einem Handover-Betrieb, bei dem auch ein Wechsel von der bisherigen Firewall zu einer neuen Firewall erfolgt, von der neuen Firewall ausgeführt werden kann, ohne dass jedes empfangene Nutzdatenpaket verworfen werden muss, wird nunmehr anhand eines beispielhaften Szenarios erläutert.

Lediglich beispielhaft sei angenommen, dass aktuell alle 15 Datenverbindungen, deren Datenverbindungs-Informationen, wie oben geschildert, in den SGSN-Netzknoten 70-100, den GTP-fähigen Firewalls 110-130 und dem GGSN-Netzknoten 140 gespeichert sind, bestehen. Dies bedeutet insbesondere, dass, solange sich das mobile Endgerät 20 im Versorgungsbereich 170 aufhält, GTP-U-Nutzdatenpakte, welche jeweils die Tunnel-Kennung "tunnel_id 1" enthalten, aktuell über die Basisstation 31, den SGSN-Netzknoten 70, die GTP-fähige Firewall 110 zum GGSN-Netzknoten 140 und von dort beispielsweise zum Ziel-Anwendungsserver 51 übertragen werden. In Figur 1 ist dieser Kommunikationspfad mit dem Bezugszeichen 150 gekennzeichnet.

Sobald ein GTP-U-Nutzdatenpaket des mobilen Endgeräts 20 am SGSN-Netzknoten 70 ankommt, kann, je nach Implementierung, der SGSN-Netzknoten 70 die Tunnel-Kennung "tunnel_id 1" aus dem Nutzdatenpaket auslesen und seine gespeicherte Liste von Datenverbindungs-Informationen solange durchsuchen, bis er die Datenverbindungs-Information mit der Tunnel-Kennung "tunnel_id 1" gefunden hat. Anschließend leitet der SGSN-Netzknoten 70 das entsprechende Nutzdatenpaket an die ihm zugeordnete GTP-fähige Firewall 110 weiter. Die GTP-Firewall 110 ist dazu ausgebildet, insbesondere unter Ausführung einer Sicherheitsregel das empfangene Nutzdatenpaket anhand der in der Speichereinrichtung 112 gespeicherten Datenverbindungs-Information zu untersuchen und nur dann zum GGSN-Netzknoten 140 weiterzuleiten, wenn die Untersuchung ergeben hat, dass das empfangene Nutzdatenpaket weitergeleitet werden darf. Insbesondere ist die GTP-Firewall 110 dazu ausgebildet, zu diesem Zweck die Tunnel-Kennung "tunnel_id 1" aus dem empfangenen Nutzdatenpaket auszulesen und zu prüfen, ob in der gespeicherten Liste von Datenverbindungs-Informationen eine Datenverbindungs-Information mit der Tunnel-Kennung "tunnel_id 1" gespeichert ist. Beim vorliegenden Beispiel werden aktuell fünf laufende Datenverbindungen mit den Tunnel-Kennungen tunnel_id 1 bis tunnel_id 5 von der GTP-Firewall 110 bearbeitet. Wie in Figur 3 zu sehen, sind in der Speichereinrichtung 112 auch die dazugehörenden Datenverbindungs-Informationen gespeichert. Folglich erkennt die GTP-fähige Firewall 110, dass die im Nutzdatenpaket enthaltene Tunnel-Kennung "tunnel_id 1" in der GTP-Firewall 110 gespeichert ist. Im einfachsten Fall erlaubt die Firewall 110 bereits die Weiterleitung eines empfangenen Nutzdatenpakets dann, wenn die im Nutzdatenpaket enthaltene Tunnel-Kennung in der Speichereinrichtung 112 gespeichert ist. Da dies im vorliegenden Fall gegeben ist, erlaubt die Firewall 110 die Weiterleitung des empfangenen Nutzdatenpakets zum GGSN-Netzknoten 140. Denkbar ist, dass in der GTP-fähigen Firewall 110 weitere Sicherheitsregeln gespeichert sind, die auch die übrigen Inhalte der Datenverbindungs-Information daraufhin untersuchen, ob das Nutzdatenpaket zum GGSN-Netzknoten 140 weitergeleitet werden darf.

Der GGSN-Netzknoten 140 ist vorzugsweise dazu ausgebildet, aus dem von der Firewall 110 empfangenen GTP-U-Nutzdatenpaket die Tunnel-Kennung "tunnel_id 1" auszulesen und die in der Speichereinrichtung 142 gespeicherte Liste von Datenverbindungs-Informationen solange zu durchsuchen, bis er die Datenverbindungs-Information mit der Tunnel-Kennung "tunnel_id 1" gefunden hat. Anschließend leitet der GGSN-Netzknoten 140 das Nutzdatenpaket an die Zieleinrichtung, zum Beispiel an den Anwendungsserver 51 des Datennetzes 50 weiter. Wie bereits oben erwähnt, sind das Speichern von Datenverbindungs-Informationen und das Durchsuchen der Liste von Datenverbindungs-Informationen mit jedem empfangenen Datenpaket lediglich optional.

Nunmehr sei beispielhaft angenommen, dass sich das mobile Endgerät 20 bzw. sein Nutzer aus dem Versorgungsbereich 170 der Basisstation 31 in den Versorgungsbereich 171 der Basisstation 32 bewegt und somit die Übertragungsqualität der Funkverbindung zwischen dem mobilen Endgerät 20 und der Basisstation 32 sich gegenüber der Übertragungsqualität der Funkverbindung zwischen dem mobilen Endgerät 20 und der Basisstation 31 verbessert. In an sich bekannter Weise kann das Mobilfunknetz 160 unter Ansprechen auf dieses Ereignis einen Handover durchführen, indem sie veranlasst, dass die laufende Datenverbindung des mobilen Endgerätes 20 nunmehr der neuen Basisstation 32 und dem neuen SGSN-Netzknoten 80 übergeben wird. Angemerkt sei, dass entsprechend der oben geschilderten Konfiguration der neue SGSN-Netzknoten 80 der GTP-fähigen Firewall 120 zugeordnet ist. Das heißt, Daten der übergebenen laufenden Datenverbindung werden nunmehr anstatt der GTP-fähigen Firewall 110 der neuen GTP-fähigen Firewall 120 zugeleitet. Die GTP-fähige Firewall 120 ist wiederum mit dem GGSN-Netzknoten 140 verbunden. Im Rahmen des Handover-Betriebs kann die Datenverbindungs-Information, welche die Tunnel-Kennung "tunnel_id 1" enthält, dem SGSN-Netzknoten 80 übergeben werden. Dies bedeutet, dass nach einem erfolgreichen Handover GTP-U-Nutzdatenpakete des mobilen Endgeräts 20, welche nach wie vor jeweils die der Datenverbindung zugeordnete Tunnelkennung "tunnel_id 1" enthalten, zunächst über die Basisstation 32 zum SGSN-Netzknoten 80 übertragen werden. Sobald ein GTP-U-Nutzdatenpaket des mobilen Endgeräts 20 am SGSN-Netzknoten 80 ankommt, kann, je nach Implementierung, der SGSN-Netzknoten 80 die Tunnel-Kennung "tunnel_id 1" aus dem Nutzdatenpaket auslesen und seine gespeicherte Liste von Datenverbindungs-Informationen solange durchsuchen, bis er die Datenverbindungs-Information mit der Tunnel-Kennung "tunnel_id 1" gefunden hat. Anschließend leitet der SGSN-Netzknoten 80 das Nutzdatenpaket an die ihm zugeordnete GTP-fähige Firewall 120 weiter. Dies ist beispielsweise in Figur 3 durch den Schritt 1 symbolisiert. Die weiteren beispielhaften Schritte der GTP-fähigen Firewall 120 werden in Verbindung mit Figur 3 erläutert. Die GTP-Firewall 120 ist dazu ausgebildet, in einem Schritt 2 insbesondere unter Ausführung einer Sicherheitsregel das empfangene Nutzdatenpaket, welches die Tunnel-Kennung "tunnel_id 1" enthält, anhand der in der Speichereinrichtung 122 gespeicherten Datenverbindungs-Informationen zu prüfen, ob eine der gespeicherten Datenverbindungs-Informationen die im empfangenen Nutzdatenpaket übertragene Tunnel-Kennung "tunnel_id 1" enthält. Wenn, wie im vorliegenden Fall nach einem Handover, die Firewall 120 feststellt, dass die im empfangenen Datenpaket enthaltene Tunnel-ID "tunnel_id1" nicht abgespeichert ist, veranlasst Sie Steuereinrichtung 121 die Firewall 120, dass vom mobilen Endgerät 20 über den SGSN-Netzknoten 80 übertragene Nutzdatenpaket beispielsweise in der Speichereinrichtungen 122 zwischenzuspeichern und eine Anforderungsnachricht zu erzeugen, die beispielsweise die in dem zwischengespeicherten Datenpaket enthaltene Tunnel-Erkennung "tunnel_id 1" enthält. Diese Anforderungsnachricht, auch als Synchronisationsanfrage bezeichnet, wird nunmehr von der Firewall 120 in Schritt 3 unter Verwendung der in der Speichereinrichtung 122 gespeicherten IP-Adressen der Firewall 110 und der Firewall 130 40 sowohl zur Firewall 130 als auch zur Firewall 110 übertragen. Die Firewalls 110 und 130 sind jeweils dazu ausgebildet, die in der Anforderungsnachricht enthaltene Tunnel-Kennung "tunnel_ID 1" auszulesen und zu prüfen, ob diese Tunnel-Kennung in einer der in der Speichereinrichtung 112 bzw. 132 gespeicherten Datenverbindungs-Informationen enthalten ist. Wie in Figur 3 gezeigt, sind in der Firewall 110 die Tunnel-Kennungen "tunnel-id 1" bis "tunnel_id 5" gespeichert, während in der auf Firewall 130 die Tunnel-Kennungen "tunnel_id 11" bis "tunnel_id 15" gespeichert sind. Somit stellt lediglich die Firewall 110 fest, dass die angeforderte Tunnel-Kennung in der Speichereinrichtung 112 gespeichert ist. Demzufolge veranlasst die Steuereinrichtung 111 die Firewall 110, die Datenverbindungs-Information, welche die angeforderte Tunnel-Kennung "tunnel_id 1" enthält, über das Kernnetz 40 zur anfordernden GTP-fähigen Firewall 120 zu übertragen, wie dies in Schritt 4 der Figur 3 gezeigt ist. Die GTP-fähige Firewall 120 kann die von der Firewall 110 empfangene Datenverbindungs-Information ebenfalls in ihrer Liste von Datenverbindungs-Informationen speichern. Die Firewall 120 ist nach der selektiven Synchronisation der Datenverbindungs-Information mit der Firewall 110 dazu in der Lage ist, die gleichen Sicherheitsüberprüfungen bzw. -untersuchungen durchzuführen, wie zuvor die Firewall 110, um festzustellen, ob das zwischengespeicherte Nutzdatenpaket weitergeleitet werden darf. Wie bereits zuvor erläutert, besteht die einfachste Prüfung darin, festzustellen, ob die im zwischengespeicherten Datenpaket enthaltende Tunnel-Kennung "tunnel_id 1" mit der Tunnel-Kennung, welche zuvor von der Firewall 110 mit der Datenverbindungs-Information empfangen worden ist, übereinstimmt. Wenn dies der Fall ist, erlaubt die Firewall 120 die Weiterleitung des zwischengespeicherten Datenpakets zum GGSN-Netzknoten 140, wie dies durch Schritt 6 in Figur 3 gezeigt ist.

Wie in Figur 1 zu sehen ist, besteht nunmehr hinsichtlich der übergebenen Datenverbindung ein Pfad 151 über die Basisstation 32 zum SGSN-Netzknoten 80, weiter über die GTP-fähige Firewall 120 zum GGSN-Netzknoten 140. Gemäß einer vorteilhaften Weiterbildung kann die Firewall 110, welche die Datenverbindungs-Information mit der angeforderten Tunnel-Kennung zur Firewall 120 übertragen hat, diese Datenverbindungs-Information aus ihrer Liste gespeicherter Datenverbindungs-Informationen löschen. Mit anderen Worten: die Firewall 110 löscht die Datenverbindungs-Information, welche die Tunnel-Kennung "tunnel_id 1" enthält.

Dank dieser besonderen Maßnahme, nämlich Datenverbindungs-Information insbesondere zwischen zwei Firewalls eines IP-basierten Kernnetzes während eines Handover-Betriebs selektiv zu synchronisieren, kommt es nicht zu einem Abbruch der laufenden Datenverbindung zwischen dem mobilen Endgerät 20 und dem Datennetz 50. Dank der selektiven Synchronisation von Datenverbindungs-Informationen werden Datenverbindungs-Informationen nur zu der GTP-Firewall übertragen, die nach einem Handover für die übergebene Datenverbindung aktuell verantwortlich ist. Durch das gleichzeitige Löschen der übergebenen Datenverbindungs-Information auf der bisherigen Firewall kann sichergestellt werden, dass die Firewall-Ressourcen effektiv genutzt werden.

Nunmehr sei angenommen, dass das mobile Endgerät 20 bzw. dessen Benutzer sich aus dem Versorgungsbereich 171 der Basisstation 32 heraus in den Versorgungsbereich 172 der Basisstation 33 bewegt und somit die Übertragungsqualität der Funkverbindung zwischen dem mobilen Endgerät 20 und der Basisstation 33 sich gegenüber der Übertragungsqualität der Funkverbindung zwischen dem mobilen Endgerät 20 und der Basisstation 32 verbessert. In an sich bekannter Weise kann das Mobilfunknetz 160 unter Ansprechen auf dieses Ereignis einen Handover durchführen, indem sie veranlasst, dass die laufende Datenverbindung des mobilen Endgerätes 20 nunmehr der neuen Basisstation 33 und dem neuen SGSN-Netzknoten 90 übergeben wird. Angemerkt sei, dass entsprechend der oben geschilderten Konfiguration der neue SGSN-Netzknoten 90 ebenfalls der GTP-fähigen Firewall 120 zugeordnet ist. Das heißt, Daten der übergebenen laufenden Datenverbindung werden nach wie vor der bisherigen GTP-fähigen Firewall 120 zugeleitet. Je nach Konfiguration können also einer GTP-fähigen-Firewall mehrere SGSN-Netzknoten und somit mehrere Basisstationen zugeordnet werden.

Nunmehr sei angenommen, dass das mobile Endgerät 20 weiterhin Nutzdatenpakete gemäß dem GTP-Protokoll erzeugt und über die laufende Datenverbindung übertragen will. Jedes Nutzdatenpaket enthält deshalb nach wie vor die Tunnel-Kennung "tunnel_id 1", die beim ersten Verbindungsaufbau vergeben worden ist.

Sobald ein GTP-U-Nutzdatenpaket des mobilen Endgeräts 20 über die Basisstation 33 am SGSN-Netzknoten 90 ankommt, kann, je nach Implementierung, der SGSN-Netzknoten 90 die Tunnel-Kennung "tunnel_id 1" aus dem Nutzdatenpaket auslesen und seine gespeicherte Liste von Datenverbindungs-Informationen solange durchsuchen, bis er die Datenverbindungs-Information mit der Tunnel-Kennung "tunnel_id 1" gefunden hat. Anschließend leitet der SGSN-Netzknoten 90 das entsprechende Nutzdatenpaket an die ihm zugeordnete GTP-fähige Firewall 120 weiter.

Die GTP-Firewall 120 ist dazu ausgebildet, insbesondere unter Ausführung einer Sicherheitsregel das empfangene Nutzdatenpaket anhand der in der Speichereinrichtung 122 gespeicherten Datenverbindungs-Information zu untersuchen und nur dann zum GGSN-Netzknoten 140 weiterzuleiten, wenn die Untersuchung ergeben hat, dass das empfangene Nutzdatenpaket weitergeleitet werden darf. Insbesondere ist die GTP-Firewall 120 dazu ausgebildet, zu diesem Zweck die Tunnel-Kennung "tunnel_id 1" aus dem empfangenen Nutzdatenpaket auszulesen und zu prüfen, ob in der gespeicherten Liste von Datenverbindungs-Informationen eine Datenverbindungs-Information mit der Tunnel-Kennung "tunnel_id 1" gespeichert ist. Da die Liste der in der Firewall 120 gespeicherten Datenverbindungs-Informationen bereits während des vorherigen Handovers, d.h. beim Wechsel des SGSN-Netzknotens 70 zum SGSN-Netzknoten 80, selektiv mit der Firewall 110 synchronisiert worden ist, ist in der Firewall 120 die Datenverbindungs-Information mit der Tunnel-Kennung "tunnel_id 1" bereits in der Speichereinrichtung 122 abgelegt. Folglich erkennt die GTP-fähige Firewall 120, dass die im Nutzdatenpaket enthaltene Tunnel-Kennung "tunnel_id 1" in der Speichereinrichtung 122 gespeichert ist. Wie weiter oben beispielhaft erläutert, erlaubt die Firewall 120 im einfachsten Fall die Weiterleitung eines empfangenen Nutzdatenpakets dann, wenn die im Nutzdatenpaket enthaltene Tunnel-Kennung in der Speichereinrichtung 122 gespeichert ist. Da dies im vorliegenden Fall gegeben ist, erlaubt die Firewall 120 die Weiterleitung des empfangenen Nutzdatenpakets zum GGSN-Netzknoten 140 und somit zum Anwendungsserver 51 des Datennetzes 50.

Wenn sich nun der Benutzer mit dem mobilen Endgerät 20 aus dem Versorgungsbereich 172 der Basisstation 33 beispielsweise in den Versorgungsbereich der Basisstation 34 bewegt, folgt erneut ein Handover bzw. eine Übergabe der laufenden Datenverbindung in der zuvor hinsichtlich eines Wechsels von der Firewall 70 zur Firewall 80 beschriebenen Weise. Allerdings erfolgt jetzt ein Wechsel vom bisherigen SGSN-Netzknoten 90 zum neuen SGSN-Netzknoten 100, ein Wechsel von der Basisstation 33 zur Basisstation 34 und Wechsel von der bisherigen GTP-Firewall 120 zur neuen GTP-Firewall 130 erfolgt. Die beiden Firewalls 120 und 130 führen anschließend das Verfahren zum selektiven Synchronisieren von Datenverbindungs-Informationen durch, wie dies vorher hinsichtlich eines Wechsels von der GTP-Firewall 110 zur GTP-Firewall 120 ausführlich erläutert worden ist.

Es versteht sich von selbst, dass das Verfahren zum selektiven Synchronisieren von Datenverbindungs-Informationen zwischen zwei Firewalls nach einem Handover auch in umgekehrter Bewegungsrichtung des mobilen Endgeräts 20 ausgeführt werden kann. Mit anderen Worten: jede der GTP-Firewalls 110,120 und 130 ist dazu ausgebildet, bei Empfang eines Nutzdatenpakets zu prüfen, ob die im Nutzdatenpaket enthaltene Tunnel-Kennung bereits in einer gespeicherten Datenverbindungs-Information enthalten ist, und, wenn nicht, eine Anforderungsnachricht bezüglich dieser neuen Tunnel-Kennung zu den übrigen Firewalls zu übertragen und darauf zu warten, dass die angeforderte Tunnel-Kennung von einer der weiteren Firewalls geschickt wird.

Nachfolgend werden zumindest einige der oben geschilderten beispielhaften Aspekte zusammengefasst.

Gemäß einem beispielhaften Aspekt wird ein Verfahren zum selektiven Synchronisieren von Datenverbindungs-Informationen zwischen Firewalls 110-130 eines IP-basierten Kernnetzes 40 eines Mobilfunknetzes 160 zur Verfügung gestellt, wobei Datenverbindungs-Informationen insbesondere nach einem Handover zwischen einer bisherigen Firewall und einer neuen Firewall selektiv ausgetauscht werden. Das Mobilfunknetz 160 ist vorzugsweise zur Übertragung von Datenpaketen gemäß einem IP-basierten Tunnel-Protokoll ausgebildet. Das Verfahren kann beispielsweise zumindest einige der folgenden Verfahrensschritten aufweisen:
a) Aufbauen, durch Initiierung eines mobilen Endgeräts 20, einer Datenverbindung über das Mobilfunknetz 160 unter Verwendung des IP-basierten Tunnel-Protokolls zu einer Zieleinrichtung 50, 51, wobei das Aufbauen der Datenverbindung folgende Schritte umfasst:
   a1) Aufbauen einer IP-basierten Tunnelverbindung von einem ersten Netzknoten, z.B. der Netzknoten 70, des IP-basierten Kernnetzes 40, welcher dem mobilen Endgerät 20 aktuell zugeordnet ist, über eine erste, dem ersten Netzknoten 70 zugeordnete Firewall, z.B. die Firewall 110, zu einem Ziel-Netzknoten 140 des IP-basierten Kernnetzes 40, welcher mit der Zieleinrichtung 50, 51 verbindbar ist, wobei der erste Netzknoten 70 einer ersten Basisstation 31 des Mobilfunknetzes 160 zugeordnet ist;
   a2) Zuordnen einer eindeutigen Tunnel-Kennung der IP-basierten Tunnelverbindung, und zwar vorzugsweise durch das Kernnetz (40);
   a3) Speichern einer Datenverbindungs-Information, welche die in Schritt a2) der IP-basierten Tunnelverbindung zugeordnete Tunnel-Kennung enthält, in dem mobilen Endgerät 20 und der ersten Firewall 110 sowie optional und je nach Implementierung auch im ersten und Ziel-Netzknoten 70 bzw. 140;
b) Übertragen über die in Schritt a) aufgebaute Datenverbindung wenigstens eines ersten Datenpakets, welches die in Schritt a2) zugeordnete Tunnel-Kennung enthält, vom mobilen Endgerät 20 über den ersten Netzknoten 70 zur ersten Firewall 110;
c) Untersuchen des ersten Datenpakets, durch die erste Firewall 110, anhand der in Schritt a3) gespeicherten Datenverbindungs-Information, welche die im ersten Datenpaket übertragene Tunnel-Kennung enthält;
d) Weiterleiten des ersten Datenpakets über die in Schritt a) aufgebaute Datenverbindung von der ersten Firewall 110 zum Ziel-Netzknoten 140 nur dann, wenn in Schritt c) die Erlaubnis zur Weiterleitung festgestellt worden ist;
e) Ausführen, unter Ansprechen auf ein vorbestimmtes Ereignis, einer Übergabe der in Schritt a) aufgebauten Datenverbindung von dem ersten Netzknoten 70 einem zweiten, einer zweiten Firewall, z.B. die Firewall 120, zugeordneten Netzknoten, z.B. dem Netzknoten 80 des IP-basierten Kernnetzes 40, wobei der zweite Netzknoten 80 einer zweiten Basisstation 32 des Mobilfunknetzes 160 zugeordnet ist;
f) Übertragen über die in Schritt e) übergebene Datenverbindung wenigstens eines zweiten Datenpakets, welches die in Schritt a2) zugeordnete Tunnel-Kennung enthält, vom mobilen Endgerät 20 über den zweiten Netzknoten 80 zur zweiten Firewall 120;
g) Prüfen, in der zweiten Firewall 10, ob die im zweiten Datenpaket enthaltene Tunnel-Kennung in der zweiten Firewall 120 gespeichert ist;
h) wenn nicht, Zwischenspeichern des zweiten Datenpakets in der zweiten Firewall 120 und Übertragen einer Anforderungsnachricht zur Anforderung der im zweiten Datenpaket enthaltenen Tunnel-Kennung von der zweiten Firewall 120 zur ersten Firewall 110;
i) Übertragen der Datenverbindungs-Information, welche die angeforderte Tunnel-Kennung enthält, von der ersten Firewall 110 zur zweiten Firewall 120;
j) Untersuchen des zweiten Datenpakets, durch die zweite Firewall 120, anhand der in Schritt i) empfangenen Datenverbindungs-Information; und
k) Weiterleiten des zweiten Datenpakets über die in Schritt e) übergebene Datenverbindung von der zweiten Firewall 120 zum Ziel-Netzknoten 140 nur dann, wenn in Schritt j) die Erlaubnis zur Weiterleitung festgestellt worden ist.

In Schritt d) wird das erste Datenpaket über die in Schritt a) aufgebaute Datenverbindung von der ersten Firewall 110 zum Ziel-Netzknoten 140 zum Beispiel dann weiteregeleitet, wenn in Schritt c) festgestellt worden ist, dass zumindest die im ersten Datenpaket enthaltene Tunnel-Kennung mit einer in der ersten Firewall 110 gespeicherten Tunnel-Kennung übereinstimmt.

In Schritt k) wird das zweite Datenpaket über die in Schritt e) übergebene Datenverbindung von der zweiten Firewall 120 zum Ziel-Netzknoten 140 zum Beispiel dann weitergeleitet, wenn in Schritt j) festgestellt worden ist, dass zumindest die im zweiten Datenpaket enthaltene Tunnel-Kennung mit einer in der zweiten Firewall 120 gespeicherten Tunnel-Kennung übereinstimmt.

Um Firewall-Ressourcen effizient nutzen zu können, kann nach Ausführung des Schritts i) die übertragene Datenverbindungs-Information in der zweiten Firewall 120 gespeichert und die in der ersten Firewall 110 gespeicherte Datenverbindungs-Information, welche mit der übertragenen Datenverbindungs-Information übereinstimmt, gelöscht werden.

Zweckmäßigerweise kann das IP-basierte Kernnetz 40 des Mobilfunknetzes 160 wenigstens einen dritten Netzknoten 100, welcher einer dritten Basisstation 34 des Mobilfunknetzes 160 zugeordnet ist, und wenigstens eine dritte Firewall 130, welche dem wenigstens einen dritten Netzknoten 100 zugeordnet ist, aufweisen, wobei Schritt h) den Schritt des Übertragens einer Anforderungsnachricht zur Anforderung der im zweiten Datenpaket enthaltenen Tunnel-Kennung von der zweiten Firewall 120 zu der ersten Firewall 110 und zu der wenigstens einen dritten Firewall 130 umfassen kann, und wobei
die erste Firewall 110 und die wenigstens eine dritte Firewall 130 unter Ansprechen auf die Anforderungsnachricht jeweils prüfen können, ob sie die Datenverbindungs-Information, welche die angeforderte Tunnel-Kennung enthält, speichern.

Vorteilhafterweise können die Schritte a) bis k) für wenigstens ein weiteres mobiles Endgerät wiederholt werden.

Vorteilhafterweise kann das IP-basierte Tunnel-Protokoll ein GPRS-Tunnel-Protokoll (GTP) sein, wobei die Datenverbindungs-Informationen GTP-Kontextinformationen sein könnend, der erste Netzknoten 70, der zweite Netzknoten 80 und der Zielnetzknoten 140 jeweils als ein GPRS (General Packet Radio Service)-fähiger Netzknoten ausgebildet sein können, wobei
in Schritt a) die IP-basierte Tunnelverbindung gemäß dem GPRS-Tunnel-Protokoll aufgebaut werden kann, und wobei
die erste und zweite Firewall 110 bzw. 120 jeweils als eine GTP-fähige Firewall ausgebildet sein können.

Vorteilhafterweise können der erste und zweite Netzknoten 70 bzw. 80 jeweils als SGSN (Serving GPRS Support Node)-Netzknoten ausgebildet sein und der Ziel-Netzknoten 140 kann als ein GGSN (Gateway GPRS Support Node)-Netzknoten ausgebildet sein, oder wobei
der erste und zweite Netzknoten 70 bzw. 80) jeweils als S-GW (Serving Gateway)-Netzknoten oder als MME (Mobility Management Entity)-Netzknoten ausgebildet sein können und der Ziel-Netzknoten 140 als P-GW (Packet Data Network Gateway)-Netzknoten ausgebildet sein kann.

Vorteilhafterweise kann die in Schritt a3) gespeicherte Datenverbindungs-Information zusätzlich einen Zugangspunkt-Name (APN: Access Point Name) und/oder den Typ einer drahtlosen Zugangstechnologie (RAT: Radio Access Technology) und/oder eine internationale Mobilfunk-Teilnehmerkennung (IMSI: International Mobile Subscriber Identity) und/oder eine Mobilfunk-Rufnummer (MSISDN: Mobile Subscriber Integrated Services Digital Network Number) enthalten.

Gemäß einem weiteren beispielhaften wird ein Datenkommunikationssystem 10 geschaffen, welches zumindest einige der folgenden Merkmale umfassen kann:
- ein Mobilfunknetz 160, welches ein IP-basiertes Kernnetz 40 aufweist, wobei das IP-basierte Kernnetz 40 einen ersten Netzknoten 70, welcher einer ersten Basisstation 31 zugeordnet sein kann, einen zweiten Netzknoten 80, welcher einer zweiten Basisstation 32 zugeordnet sein kann, eine erste Firewall 110, welche dem ersten Netzknoten 70 zugeordnet sein kann, eine zweite Firewall 120, die dem zweiten Netzknoten 80 zugeordnet sein kann, und wenigstens einen Ziel-Netzknoten 140, der mit einer Zieleinrichtung (50, 51) verbindbar ist, aufweisen, wobei das Datenkommunikationssystem 10 zur Übertragung von Datenpaketen gemäß einem IP-basierten Tunnel-Protokoll ausgebildet sein kann, und
- wenigstens ein mobiles Endgerät 20, welches eine Steuereinrichtung 21 und eine Speichereinrichtung 22, in der wenigstens eine Information (IMSI, MSISDN) zum Identifizieren des mobilen Endgeräts (20) und wenigstens eine Information (APN) zum Identifizieren des wenigstens einen Ziel-Netzknotens 140 sowie das IP-basierte Tunnel-Protokoll gespeichert sein können, aufweist,

wobei die Steuereinrichtung 21 des mobilen Endgerät 20 dazu ausgebildet sein kann, unter Ausführung des IP-basierten Tunnel-Protokolls und unter Verwendung der Information zum Identifizieren des Ziel-Netzknotens 140 das mobile Endgerät 20 zu veranlassen, den Aufbau einer Datenverbindung über das Mobilfunknetz zu einer Zieleinrichtung 50, 51 einzuleiten, wobei das Aufbauen der Datenverbindung das Aufbauen einer IP-basierten Tunnelverbindung von dem ersten Netzknoten 70 des IP-basierten Kernnetzes 40, welcher dem mobilen Endgerät 20 aktuell zugeordnet ist, über die erste Firewall 110 zu dem Ziel-Netzknoten 140 des IP-basierten Kernnetzes 40, umfassen kann, wobei
das IP-basierte Kernnetz 40 dazu ausgebildet sein kann, der IP-basierten Tunnelverbindung eine eindeutige Tunnel-Kennung zuzuordnen und das Speichern einer Datenverbindungs-Information, welche die der IP-basierten Tunnelverbindung zugeordnete Tunnel-Kennung enthält, in dem mobilen Endgerät 20 und der ersten Firewall 110, und gegebenenfalls optional in dem Ziel-Netzknoten 140 und dem ersten Netzknoten 70 zu veranlassen,
wobei die Steuereinrichtung 21 des mobilen Endgerät 20 dazu ausgebildet sein kann, das mobile Endgerät 20 zu veranlassen, wenigstens ein erstes Datenpaket, welches die gespeicherte Tunnel-Kennung enthält, zu erzeugen, wobei die Übertragung des ersten Datenpakets über die aufgebaute Datenverbindung und den ersten Netzknotens 70 zur ersten Firewall 110 erfolgt, wobei
die erste Firewall 110 dazu ausgebildet sein kann, das erste Datenpaket anhand der gespeicherten Datenverbindungs-Information, welche die im ersten Datenpaket übertragene Tunnel-Kennung enthält, zu untersuchen und das erste Datenpaket über aufgebaute Datenverbindung zum Ziel-Netzknoten 140 nur dann weiterzuleiten, wenn die Untersuchung des ersten Datenpakets die Erlaubnis zur Weiterleitung ergeben hat, wobei
das Mobilfunknetz 160 dazu ausgebildet sein kann, unter Ansprechen auf ein vorbestimmtes Ereignis die zwischen dem mobilen Endgerät 20 und der Zieleinrichtung 50, 51 bestehende Datenverbindung vom ersten Netzknoten 70 dem zweiten Netzknoten 80 zu übergeben, wobei
die Steuereinrichtung 21 des mobilen Endgerät 20 dazu ausgebildet sein kann, das mobile Endgerät 20 zu veranlassen, wenigstens ein zweites Datenpaket, welches die gespeicherte Tunnel-Kennung enthält, zu erzeugen, wobei die Übertragung des zweiten Datenpakets über die übergebene Datenverbindung und den zweiten Netzknotens 80 zur zweiten Firewall 120 erfolgt, wobei
die zweite Firewall 120 dazu ausgebildet sein kann,
   - zu prüfen, ob die im zweiten Datenpaket enthaltene Tunnel-Kennung in der zweiten Firewall 120 gespeichert ist, und
   - wenn nicht, das zweite Datenpaket zwischenzuspeichern und eine Anforderungsnachricht zur Anforderung der im zweiten Datenpaket enthaltenen Tunnel-Kennung zur ersten Firewall 110 zu übertragen, wobei
die erste Firewall 110 dazu ausgebildet sein kann, unter Ansprechen auf die Anforderungsnachricht die Datenverbindungs-Information, welche die angeforderte Tunnel-Kennung enthält, zur zweiten Firewall 120 zu übertragen, wobei
die zweite Firewall 120 dazu ausgebildet sein kann, das zweite Datenpaket anhand der empfangenen Datenverbindungs-Information zu untersuchen und das zweite Datenpaket über aufgebaute Datenverbindung zum Ziel-Netzknoten 140 nur dann weiterzuleiten, wenn die Untersuchung des zweiten Datenpakets die Erlaubnis zur Weiterleitung ergeben hat.

Ein vorbestimmtes Ereignis, welches die Übergabe einer laufenden Datenverbindung auslöst, kann zum Beispiel die Überlastung der aktuell vom mobilen Endgerät 20 verwendeten Basisstation, die Verschlechterung der Übertragungsqualität der aktuellen Funkverbindung zwischen dem mobilen Endgerät 20 und der aktuell verwendeten Basisstation oder das Verlassen des Versorgungsbereichs der aktuell vom mobilen Endgerät 20 benutzten Basisstation darstellen.

Vorteilhafterweise kann die zweite Firewall 120 dazu ausgebildet sein, die von der ersten Firewall 110 empfangene Datenverbindungs-Information zu speichern, wobei die erste Firewall 110 dazu ausgebildet sein kann, die gespeicherte Datenverbindungs-Information, welche mit der übertragenen Datenverbindungs-Information übereinstimmt, zu löschen.

Vorteilhafterweise kann das IP-basierte Kernnetz 40 wenigstens einen dritten Netzknoten 100, welcher einer dritten Basisstation 34 des Mobilfunknetzes 160 zugeordnet sein kann, und wenigstens eine dritte Firewall 130 , welche dem wenigstens einen dritten Netzknoten 100 zugeordnet sein kann, aufweisen, wobei die zweite Firewall 120 dazu ausgebildet sein kann, eine Anforderungsnachricht zur Anforderung der im zweiten Datenpaket enthaltenen Tunnel-Kennung zur ersten Firewall 110 und zu der wenigstens einen dritten Firewall 130 zu übertragen, wobei die erste Firewall 110 und die wenigstens eine dritte Firewall 130 jeweils dazu ausgebildet sein können, unter Ansprechen auf die Anforderungsnachricht zu prüfen, ob die Datenverbindungs-Information, welche die angeforderte Tunnel-Kennung enthält, in der ersten Firewall 110 bzw. der wenigstens einen dritten Firewall 130 gespeichert ist.

Vorzugsweise kann das IP-basierte Kernnetz 40 mehrere erste, jeweils einer ersten Basisstation zugeordnete Netzknoten aufweisen, wobei
die erste Firewall den mehreren ersten Netzknoten zugeordnet sein kann, wobei die ersten Netzknoten jeweils dazu ausgebildet sein können, Datenpakete zur ersten Firewall weiterzuleiten, und/oder wobei
das IP-basierte Kernnetz 40 mehrere zweite, jeweils einer zweiten Basisstation 32, 33 zugeordnete Netzknoten 80, 90 aufweisen kann, wobei
die zweite Firewall 120 den mehreren zweiten Netzknoten 80, 90 zugeordnet sein kann, wobei die zweiten Netzknoten 80, 90 jeweils dazu ausgebildet sein können, Datenpakete zur zweiten Firewall 120 weiterzuleiten.

Vorteilhafterweise kann das IP-basierte Tunnel-Protokoll ein GPRS-Tunnel-Protokoll (GTP) sein, wobei Datenverbindungs-Informationen GTP-Kontextinformationen sein können, der erste Netzknoten 70, der zweite Netzknoten 80 und der Zielnetzknoten 140 jeweils als ein GPRS (General Packet Radio Service)-fähiger Netzknoten ausgebildet sein können, und wobei
die erste und zweite Firewall 110 bzw. 120 jeweils als eine GTP-fähige Firewall ausgebildet sein können.

Vorteilhafterweise können der erste und zweite Netzknoten 70 bzw. 80 jeweils als SGSN (Serving GPRS Support Node)-Netzknoten ausgebildet sein, wobei der Ziel-Netzknoten (140) als ein GGSN (Gateway GPRS Support Node)-Netzknoten ausgebildet sein kann, oder wobei
der erste und zweite Netzknoten 70 bzw. 80 jeweils als S-GW (Serving Gateway)-Netzknoten oder als MME (Mobility Management Entity)-Netzknoten ausgebildet sein können, wobei der Ziel-Netzknoten (110, 120) als P-GW (Packet Data Network Gateway)-Netzknoten ausgebildet sein kann.

Die Datenverbindungs-Information kann insbesondere einen Zugangspunkt-Name (APN: Access Point Name eines GGSN) und/oder den Typ einer drahtlosen Zugangstechnologie (RAT: Radio Access Technology) und/oder eine internationale Mobilfunk-Teilnehmerkennung (IMSI: International Mobile Subscriber Identity) und/oder eine Mobilfunk-Rufnummer (MSISDN: Mobile Subscriber Integrated Services Digital Network Number) enthalten.

Vorteilhafterweise ist das wenigstens eine mobile Endgerät 20 zur drahtlosen Datenübertragung ausgebildet ist, wobei das mobile Endgerät 20 in einem Kraftfahrzeug implementiert, oder ein Sensor, oder ein Mobilfunktelefon, oder ein tragbarer Rechner sein kann, wobei
die Zieleinrichtung ein Paketdatennetz 50 oder ein Rechner 51 eines Paketdatennetzes 50 oder ein Rechner ist.

## Patentansprüche

1. Verfahren zum selektiven Synchronisieren von Datenverbindungs-Informationen zwischen Firewalls (110-130) eines IP-basierten Kernnetzes (40) eines Mobilfunknetzes (160), wobei das Mobilfunknetz (160) zur Übertragung von Datenpaketen gemäß einem IP-basierten Tunnel-Protokoll ausgebildet ist, mit folgenden Verfahrensschritten:
a) Aufbauen, durch Initiierung eines mobilen Endgeräts (20), einer Datenverbindung über das Mobilfunknetz (160) unter Verwendung des IP-basierten Tunnel-Protokolls zu einer Zieleinrichtung (50, 51), wobei das Aufbauen der Datenverbindung folgende Schritte umfasst:
a1) Aufbauen einer IP-basierten Tunnelverbindung von einem ersten Netzknoten (70) des IP-basierten Kernnetzes (40), welcher dem mobilen Endgerät (20) aktuell zugeordnet ist, über eine erste, dem ersten Netzknoten (70) zugeordnete Firewall (110) zu einem Ziel-Netzknoten (140) des IP-basierten Kernnetzes (40), welcher mit der Zieleinrichtung (50, 51) verbindbar ist, wobei der erste Netzknoten (70) einer ersten Basisstation (31) des Mobilfunknetzes (160) zugeordnet ist;
a2) Zuordnen einer eindeutigen Tunnel-Kennung der IP-basierten Tunnelverbindung;
a3) Speichern einer Datenverbindungs-Information, welche die in Schritt a2) der IP-basierten Tunnelverbindung zugeordnete Tunnel-Kennung enthält, in dem mobilen Endgerät (20) und der ersten Firewall (110);
b) Übertragen über die in Schritt a) aufgebaute Datenverbindung wenigstens eines ersten Datenpakets, welches die in Schritt a2) zugeordnete Tunnel-Kennung enthält, vom mobilen Endgerät (20) über den ersten Netzknoten (70) zur ersten Firewall (110);
c) Untersuchen des ersten Datenpakets, durch die erste Firewall (110), anhand der in Schritt a3) gespeicherten Datenverbindungs-Information, welche die im ersten Datenpaket übertragene Tunnel-Kennung enthält;
d) Weiterleiten des ersten Datenpakets über die in Schritt a) aufgebaute Datenverbindung von der ersten Firewall (110) zum Ziel-Netzknoten (140) nur dann, wenn in Schritt c) die Erlaubnis zur Weiterleitung festgestellt worden ist;
e) Übergeben, unter Ansprechen auf ein vorbestimmtes Ereignis, der in Schritt a) aufgebauten Datenverbindung von dem ersten Netzknoten (70) einem zweiten, einer zweiten Firewall (120) zugeordneten Netzknoten (80) des IP-basierten Kernnetzes (40), wobei der zweite Netzknoten (80) einer zweiten Basisstation (32) des Mobilfunknetzes (160) zugeordnet ist;
f) Übertragen über die in Schritt e) übergebene Datenverbindung wenigstens eines zweiten Datenpakets, welches die in Schritt a2) zugeordnete Tunnel-Kennung enthält, vom mobilen Endgerät (20) über den zweiten Netzknoten (80) zur zweiten Firewall (120);
g) Prüfen, in der zweiten Firewall (10), ob die im zweiten Datenpaket enthaltene Tunnel-Kennung in der zweiten Firewall (120) gespeichert ist;
h) wenn nicht, Zwischenspeichern des zweiten Datenpakets in der zweiten Firewall (120) und Übertragen einer Anforderungsnachricht zur Anforderung der im zweiten Datenpaket enthaltenen Tunnel-Kennung von der zweiten Firewall (120) zur ersten Firewall (110);
i) Übertragen der Datenverbindungs-Information, welche die angeforderte Tunnel-Kennung enthält, von der ersten Firewall (110) zur zweiten Firewall; (120)
j) Untersuchen des zweiten Datenpakets, durch die zweite Firewall (120), anhand der in Schritt i) empfangenen Datenverbindungs-Information; und
k) Weiterleiten des zweiten Datenpakets über die in Schritt e) übergebene Datenverbindung von der zweiten Firewall (120) zum Ziel-Netzknoten (140) nur dann, wenn in Schritt j) die Erlaubnis zur Weiterleitung festgestellt worden ist.

2. Verfahren nach Anspruch 1,
**dadurch gekennzeichnet, dass**
nach Ausführung des Schritts i) die übertragene Datenverbindungs-Information in der zweiten Firewall (120) gespeichert und die in der ersten Firewall (110) gespeicherte Datenverbindungs-Information, welche mit der übertragenen Datenverbindungs-Information übereinstimmt, gelöscht wird.

3. Verfahren nach Anspruch 1 oder 2,
**dadurch gekennzeichnet, dass**
das IP-basierte Kernnetz (40) des Mobilfunknetzes (160) wenigstens einen dritten Netzknoten (100), welcher einer dritten Basisstation (34) des Mobilfunknetzes (160) zugeordnet ist, und wenigstens eine dritte Firewall (130), welche dem wenigstens einen dritten Netzknoten( 100) zugeordnet ist, aufweist, dass
Schritt h) den Schritt des Übertragens einer Anforderungsnachricht zur Anforderung der im zweiten Datenpaket enthaltenen Tunnel-Kennung von der zweiten Firewall (120) zu der ersten Firewall (110) und zu der wenigstens einen dritten Firewall (130) umfasst, und dass
die erste Firewall (110) und die wenigstens eine dritte Firewall (130) unter Ansprechen auf die Anforderungsnachricht jeweils prüfen, ob sie die Datenverbindungs-Information, welche die angeforderte Tunnel-Kennung enthält, speichern.

4. Verfahren nach einem der vorstehenden Ansprüche,
**dadurch gekennzeichnet, dass**
die Schritte a) bis k) für wenigstens ein weiteres mobiles Endgerät wiederholt werden.

5. Verfahren nach einem der vorstehenden Ansprüche,
**dadurch gekennzeichnet, dass**
das IP-basierte Tunnel-Protokoll ein GPRS-Tunnel-Protokoll (GTP) ist, dass die Datenverbindungs-Informationen GTP-Kontextinformationen sind, dass der erste Netzknoten (70), der zweite Netzknoten (80) und der Zielnetzknoten (140) jeweils als ein GPRS (General Packet Radio Service)-fähiger Netzknoten ausgebildet sind, dass
in Schritt a) die IP-basierte Tunnelverbindung gemäß dem GPRS-Tunnel-Protokoll aufgebaut wird, und dass
die erste und zweite Firewall (110, 120) jeweils als eine GTP-fähige Firewall ausgebildet sind.

6. Verfahren nach Anspruch 5,
**dadurch gekennzeichnet, dass**
der erste und zweite Netzknoten (70, 80) jeweils als SGSN (Serving GPRS Support Node)-Netzknoten ausgebildet sind und der Ziel-Netzknoten (140) als ein GGSN (Gateway GPRS Support Node)-Netzknoten ausgebildet ist, oder dass der erste und zweite Netzknoten (70, 80) jeweils als S-GW (Serving Gateway)-Netzknoten oder als MME (Mobility Management Entity)-Netzknoten ausgebildet sind und der Ziel-Netzknoten (140) als P-GW (Packet Data Network Gateway)-Netzknoten ausgebildet ist.

7. Verfahren nach einem der vorstehenden Ansprüche,
**dadurch gekennzeichnet, dass**
die in Schritt a3) gespeicherte Datenverbindungs-Information zusätzlich einen Zugangspunkt-Name (APN: Access Point Name) und/oder den Typ einer drahtlosen Zugangstechnologie (RAT: Radio Access Technology) und/oder eine internationale Mobilfunk-Teilnehmerkennung (IMSI: International Mobile Subscriber Identity) und/oder eine Mobilfunk-Rufnummer (MSISDN: Mobile Subscriber Integrated Services Digital Network Number) enthält.

8. Datenkommunikationssystem (10) umfassend:
- ein Mobilfunknetz (160), welches ein IP-basiertes Kernnetz (40) aufweist, wobei das IP-basierte Kernnetz (40) einen ersten Netzknoten (70), welcher einer ersten Basisstation (31) zugeordnet ist, einen zweiten Netzknoten (80), welcher einer zweiten Basisstation (32) zugeordnet ist, eine erste Firewall (110), welche dem ersten Netzknoten (70) zugeordnet ist, eine zweite Firewall (120), die dem zweiten Netzknoten (80) zugeordnet ist, und wenigstens einen Ziel-Netzknoten (140), der mit einer Zieleinrichtung (50, 51) verbindbar ist, aufweist, wobei das Datenkommunikationssystem (10) zur Übertragung von Datenpaketen gemäß einem IP-basierten Tunnel-Protokoll ausgebildet ist, und
- wenigstens ein mobiles Endgerät (20), welches eine Steuereinrichtung (21) und eine Speichereinrichtung (22), in der wenigstens eine Information (IMSI, MSISDN) zum Identifizieren des mobilen Endgeräts (20) und wenigstens eine Information (APN) zum Identifizieren des wenigstens einen Ziel-Netzknotens (140) sowie das IP-basierte Tunnel-Protokoll gespeichert sind, aufweist, wobei die Steuereinrichtung (21) des mobilen Endgerät (20) dazu ausgebildet ist,
unter Ausführung des IP-basierten Tunnel-Protokolls und unter Verwendung der Information zum Identifizieren des Ziel-Netzknotens (140) das mobile Endgerät (20) zu veranlassen, den Aufbau einer Datenverbindung über das Mobilfunknetz zu einer Zieleinrichtung (50, 51) einzuleiten, wobei das Aufbauen der Datenverbindung das Aufbauen einer IP-basierten Tunnelverbindung von dem ersten Netzknoten (70) des IP-basierten Kernnetzes (40), welcher dem mobilen Endgerät (20) aktuell zugeordnet ist, über die erste Firewall (110) zu dem Ziel-Netzknoten (140) des IP-basierten Kernnetzes (40), umfasst, wobei das IP-basierte Kernnetz (40) dazu ausgebildet ist, der IP-basierten Tunnelverbindung eine eindeutige Tunnel-Kennung zuzuordnen und das Speichern einer Datenverbindungs-Information, welche die der IP-basierten Tunnelverbindung zugeordnete Tunnel-Kennung enthält, in dem mobilen Endgerät (20) und der ersten Firewall (110) zu veranlassen,
wobei die Steuereinrichtung (21) des mobilen Endgerät (20) dazu ausgebildet ist, das mobile Endgerät (20) zu veranlassen, wenigstens ein erstes Datenpaket, welches die gespeicherte Tunnel-Kennung enthält, zu erzeugen, wobei die Übertragung des ersten Datenpakets über die aufgebaute Datenverbindung und den ersten Netzknotens (70) zur ersten Firewall (110) erfolgt, wobei die erste Firewall (110) dazu ausgebildet ist, das erste Datenpaket anhand der gespeicherten Datenverbindungs-Information, welche die im ersten Datenpaket übertragene Tunnel-Kennung enthält, zu untersuchen und das erste Datenpaket über aufgebaute Datenverbindung zum Ziel-Netzknoten (140) nur dann weiterzuleiten, wenn die Untersuchung des ersten Datenpakets die Erlaubnis zur Weiterleitung ergeben hat, wobei
das Mobilfunknetz (160) dazu ausgebildet ist, unter Ansprechen auf ein vorbestimmtes Ereignis die zwischen dem mobilen Endgerät (20) und der Zieleinrichtung (50, 51) bestehende Datenverbindung vom ersten Netzknoten (70) dem zweiten Netzknoten (80) zu übergeben, wobei die Steuereinrichtung (21) des mobilen Endgerät (20) dazu ausgebildet ist, das mobile Endgerät (20) zu veranlassen, wenigstens ein zweites Datenpaket, welches die gespeicherte Tunnel-Kennung enthält, zu erzeugen, wobei die Übertragung des zweiten Datenpakets über die übergebene Datenverbindung und den zweiten Netzknotens (80) zur zweiten Firewall (120) erfolgt, wobei die zweite Firewall (120) dazu ausgebildet ist
- zu prüfen, ob die im zweiten Datenpaket enthaltene Tunnel-Kennung in der zweiten Firewall (120) gespeichert ist, und
- wenn nicht, das zweite Datenpaket zwischenzuspeichern und eine Anforderungsnachricht zur Anforderung der im zweiten Datenpaket enthaltenen Tunnel-Kennung zur ersten Firewall (110) zu übertragen, wobei die erste Firewall (110) dazu ausgebildet ist, unter Ansprechen auf die Anforderungsnachricht die Datenverbindungs-Information, welche die angeforderte Tunnel-Kennung enthält, zur zweiten Firewall (120) zu übertragen, wobei
die zweite Firewall (120) dazu ausgebildet ist, das zweite Datenpaket anhand der empfangenen Datenverbindungs-Information zu untersuchen und das zweite Datenpaket über aufgebaute Datenverbindung zum Ziel-Netzknoten (140) nur dann weiterzuleiten, wenn die Untersuchung des zweiten Datenpakets die Erlaubnis zur Weiterleitung ergeben hat.

9. Datenkommunikationssystem nach Anspruch 8,
**dadurch gekennzeichnet, dass**
die zweite Firewall (120) dazu ausgebildet ist, die von der ersten Firewall (110) empfangene Datenverbindungs-Information zu speichern, und dass die erste Firewall (110) dazu ausgebildet ist, die gespeicherte Datenverbindungs-Information, welche mit der übertragenen Datenverbindungs-Information übereinstimmt, zu löschen.

10. Datenkommunikationssystem nach Anspruch 8 oder 9,
**dadurch gekennzeichnet, dass**
das IP-basierte Kernnetz (40) wenigstens einen dritten Netzknoten (100), welcher einer dritten Basisstation (34) des Mobilfunknetzes (160) zugeordnet ist, und wenigstens eine dritte Firewall (130) , welche dem wenigstens einen dritten Netzknoten (100) zugeordnet ist, aufweist, dass
die zweite Firewall (120) dazu ausgebildet ist, eine Anforderungsnachricht zur Anforderung der im zweiten Datenpaket enthaltenen Tunnel-Kennung zur ersten Firewall (110) und zu der wenigstens einen dritten Firewall (130) zu übertragen, und dass
die erste Firewall (110) und die wenigstens eine dritte Firewall (130) jeweils dazu ausgebildet sind, unter Ansprechen auf die Anforderungsnachricht zu prüfen, ob die Datenverbindungs-Information, welche die angeforderte Tunnel-Kennung enthält, in der ersten Firewall (110) bzw. der wenigstens einen dritten Firewall (130) gespeichert ist.

11. Datenkommunikationssystem nach einem der Ansprüche 8 bis 10,
**dadurch gekennzeichnet, dass**
das IP-basierte Kernnetz (40) mehrere erste, jeweils einer ersten Basisstation zugeordnete Netzknoten aufweist, dass
die erste Firewall den mehreren ersten Netzknoten zugeordnet ist, wobei die ersten Netzknoten jeweils dazu ausgebildet sind, Datenpakete zur ersten Firewall weiterzuleiten, und/oder dass
das IP-basierte Kernnetz (40) mehrere zweite, jeweils einer zweiten Basisstation (32, 33) zugeordnete Netzknoten (80, 90) aufweist, und dass die zweite Firewall (120) den mehreren zweiten Netzknoten (80, 90) zugeordnet ist, wobei die zweiten Netzknoten (80, 90) jeweils dazu ausgebildet sind, Datenpakete zur zweiten Firewall (120) weiterzuleiten.

12. Datenkommunikationssystem nach einem der Ansprüche 8 bis 11,
**dadurch gekennzeichnet, dass**
das IP-basierte Tunnel-Protokoll ein GPRS-Tunnel-Protokoll (GTP) ist, dass die Datenverbindungs-Informationen GTP-Kontextinformationen sind, dass der erste Netzknoten (70), der zweite Netzknoten (80) und der Zielnetzknoten (140) jeweils als ein GPRS (General Packet Radio Service)-fähiger Netzknoten ausgebildet sind, und dass
die erste und zweite Firewall (110, 120) jeweils als eine GTP-Firewall ausgebildet sind.

13. Datenkommunikationssystem nach Anspruch 12,
**dadurch gekennzeichnet, dass**
der erste und zweite Netzknoten (70, 80) jeweils als SGSN (Serving GPRS Support Node)-Netzknoten ausgebildet sind und der Ziel-Netzknoten (140) als ein GGSN (Gateway GPRS Support Node)-Netzknoten ausgebildet ist, oder dass der erste und zweite Netzknoten (70, 80) jeweils als S-GW (Serving Gateway)-Netzknoten oder als MME (Mobility Management Entity)-Netzknoten ausgebildet sind und der Ziel-Netzknoten (110, 120) als P-GW (Packet Data Network Gateway)-Netzknoten ausgebildet ist.

14. Datenkommunikationssystem nach einem der Ansprüche 8 bis 13,
**dadurch gekennzeichnet, dass**
die Datenverbindungs-Information einen Zugangspunkt-Name (APN: Access Point Name eines GGSN) und/oder den Typ einer drahtlosen Zugangstechnologie (RAT: Radio Access Technology) und/oder eine internationale Mobilfunk-Teilnehmerkennung (IMSI: International Mobile Subscriber Identity) und/oder eine Mobilfunk-Rufnummer (MSISDN: Mobile Subscriber Integrated Services Digital Network Number) enthält.

15. Datenkommunikationssystem nach einem der Ansprüche 8 bis 14,
**dadurch gekennzeichnet, dass**
das wenigstens eine mobile Endgerät zur drahtlosen Datenübertragung ausgebildet ist, wobei das mobile Endgerät in einem Kraftfahrzeug implementiert ist, oder ein Sensor, oder ein Mobilfunktelefon, oder ein tragbarer Rechner ist, und dass
die Zieleinrichtung (50, 51) ein Paketdatennetz oder ein Rechner eines Paketdatennetzes oder ein Rechner ist.

## Claims

1. A method for selectively synchronizing data connection information between firewalls (110-130) of an IP-based core network (40) of a mobile radio network (160), wherein the mobile radio network (160) is designed to transmit data packets according to an IP-based tunneling protocol, comprising the following method steps:
a) establishing, by initiating a mobile terminal (20), a data connection via the mobile radio network (160) using the IP-based tunneling protocol to a destination device (50, 51), wherein establishing the data connection comprises the following steps:
a1) establishing an IP-based tunnel connection from a first network node (70) of the IP-based core network (40) currently associated with the mobile terminal (20) via a first firewall (110) associated with the first network node (70) to a destination network node (140) of the IP-based core network (40) connectable to the destination device (50, 51), wherein the first network node (70) is associated with a first base station (31) of the mobile network (160);
a2) assigning a unique tunnel identifier to the IP-based tunnel connection;
a3) storing, in the mobile terminal (20) and the first firewall (110), data link information including the tunnel identifier assigned in step a2) to the IP-based tunnel connection;
b) transmitting, over the data link established in step a), at least a first data packet containing the tunnel identifier associated in step a2) from the mobile terminal (20) to the first firewall (110) via the first network node (70);
c) examining the first data packet, by the first firewall (110), using the data link information stored in step a3), which includes the tunnel identifier transmitted in the first data packet;
d) forwarding, over the data link established in step a), the first data packet from the first firewall (110) to the destination network node (140) only if permission to forward has been determined in step c);
e) handing over, in response to a predetermined event, the data link established in step a) from the first network node (70) to a second network node (80) of the IP-based core network (40) associated with a second firewall (120), the second network node (80) being associated with a second base station (32) of the mobile network (160);
f) transmitting, over the data link handed over in step e), at least one second data packet containing the tunnel identifier assigned in step a2) from the mobile terminal (20) to the second firewall (120) via the second network node (80);
g) checking, in the second firewall (10), whether the tunnel identifier contained in the second data packet is stored in the second firewall (120);
h) if not, buffering the second data packet in the second firewall (120) and transmitting a request message requesting the tunnel identifier contained in the second data packet from the second firewall (120) to the first firewall (110);
i) transmitting the data link information containing the requested tunnel identifier from the first firewall (110) to the second firewall; (120)
j) examining, by the second firewall (120), the second data packet based on the data link information received in step i); and
(k) forwarding the second data packet over the data link handed over in step (e) from the second firewall (120) to the destination network node (140) only if permission to forward has been determined in step (j).

2. The method according to claim 1,
**characterized in that**
after execution of step i), the transmitted data connection information is stored in the second firewall (120) and the data connection information stored in the first firewall (110) that matches the transmitted data connection information is deleted.

3. The method according to claim 1 or 2,
**characterized in that**
the IP-based core network (40) of the mobile network (160) comprises at least one third network node (100) associated with a third base station (34) of the mobile network (160) and at least one third firewall (130) associated with the at least one third network node( 100), **in that**
step h) comprises the step of transmitting a request message for requesting the tunnel identifier contained in the second data packet from the second firewall (120) to the first firewall (110) and to the at least one third firewall (130), and **in that** the
first firewall (110) and the at least one third firewall (130), in response to the request message, each check whether they store the data link information containing the requested tunnel identifier.

4. The method according to one of the preceding claims,
**characterized in that**
steps a) to k) are repeated for at least one further mobile terminal.

5. The method according to any one of the preceding claims, **characterized in that**
the IP-based tunnel protocol is a GPRS tunnel protocol (GTP),
that the data link information is GTP context information, that the first network node (70), the second network node (80) and the destination network node (140) are each formed as a GPRS (General Packet Radio Service)-capable network node,
**in that** in step a) the IP-based tunnel connection is established according to the GPRS tunnel protocol, and **in that**
the first and second firewalls (110, 120) are each formed as a GTP-capable firewall.

6. The method according to claim 5,
**characterized in that**
the first and second network nodes (70, 80) are each formed as SGSN (Serving GPRS Support Node) network nodes and the destination network node (140) is formed as a GGSN (Gateway GPRS Support Node) network node, or **in that** the first and second network nodes (70, 80) are each designed as an S-GW (Serving Gateway) network node or as an MME (Mobility Management Entity) network node and the destination network node (140) is designed as a P-GW (Packet Data Network Gateway) network node.

7. The method according to one of the preceding claims,
**characterized in that**
the data connection information stored in step a3) additionally contains an access point name (APN) and/or the type of a wireless access technology (RAT: Radio Access Technology) and/or an international mobile subscriber identity (IMSI) and/or a mobile telephone number (MSISDN: Mobile Subscriber Integrated Services Digital Network Number).

8. A data communication system (10) comprising:
- a mobile network (160) having an IP-based core network (40), the IP-based core network (40) including a first network node (70) associated with a first base station (31), a second network node (80) associated with a second base station (32), a first firewall (110) associated with the first network node (70), and a second firewall (120) associated with the second network node (80), and at least one destination network node (140) connectable to a destination device (50, 51), wherein the data communication system (10) is designed for transmitting data packets according to an IP-based tunnel protocol, and
- at least one mobile terminal (20), which has a control device (21) and a memory device (22) in which at least one item of information (IMSI, MSISDN) for identifying the mobile terminal (20) and at least one item of information (APN) for identifying the at least one destination network node (140) as well as the IP-based tunnel protocol are stored,
the control device (21) of the mobile terminal (20) being configured to while executing the IP-based tunnel protocol and using the information for identifying the destination network node (140), to cause the mobile terminal (20) to initiate the establishment of a data connection via the mobile radio network to a destination device (50, 51), wherein establishing the data connection comprises establishing an IP-based tunnel connection from the first network node (70) of the IP-based core network (40) currently associated with the mobile terminal (20) via the first firewall (110) to the destination network node (140) of the IP-based core network (40), wherein
the IP-based core network (40) is adapted to assign a unique tunnel identifier to the IP-based tunnel connection and to cause storage in the mobile terminal (20) and the first firewall (110) of data link information including the tunnel identifier assigned to the IP-based tunnel connection,
wherein the control means (21) of the mobile terminal (20) is adapted to cause the mobile terminal (20) to generate at least a first data packet containing the stored tunnel identifier, the first data packet being transmitted to the first firewall (110) via the established data connection and the first network node (70), wherein
the first firewall (110) is adapted to examine the first data packet based on the stored data link information containing the tunnel identifier transmitted in the first data packet and to forward the first data packet via established data connection to the destination network node (140) only if the examination of the first data packet has resulted in permission for forwarding, wherein
the mobile network (160) is designed to transfer the data connection existing between the mobile terminal (20) and the destination device (50, 51) from the first network node (70) to the second network node (80) in response to a predetermined event, wherein
the control device (21) of the mobile terminal (20) is designed to cause the mobile terminal (20) to generate at least a second data packet which contains the stored tunnel identifier, the second data packet being transmitted via the transferred data connection and the second network node (80) to the second firewall (120),
the second firewall (120) being designed to
- check whether the tunnel identifier contained in the second data packet is stored in the second firewall (120), and
- if not, buffering the second data packet and transmitting a request message for requesting the tunnel identifier contained in the second data packet to the first firewall (110), wherein
the first firewall (110) is adapted to transmit the data link information containing the requested tunnel identifier to the second firewall (120) in response to the request message, wherein
the second firewall (120) is adapted to examine the second data packet based on the received data link information and to forward the second data packet via established data connection to the destination network node (140) only if the examination of the second data packet has resulted in permission for forwarding.

9. The data communication system according to claim 8,
**characterized in that**
the second firewall (120) is adapted to store the data connection information received from the first firewall (110), and that
the first firewall (110) is adapted to delete the stored data connection information that matches the transmitted data connection information.

10. The data communication system according to claim 8 or 9,
**characterized in that**
the IP-based core network (40) comprises at least one third network node (100) associated with a third base station (34) of the mobile network (160) and at least one third firewall (130) associated with the at least one third network node (100), **in that**
the second firewall (120) is arranged to transmit a request message for requesting the tunnel identifier contained in the second data packet to the first firewall (110) and to the at least one third firewall (130), and **in that** the first firewall (110) and the at least one third firewall (130) are each configured to check, in response to the request message, whether the data link information containing the requested tunnel identifier is stored in the first firewall (110) and the at least one third firewall (130), respectively.

11. The data communication system according to any one of claims 8 to 10,
**characterized in that**
the IP-based core network (40) comprises a plurality of first network nodes each associated with a first base station, that
the first firewall is associated with the plurality of first network nodes, the first network nodes each being adapted to forward data packets to the first firewall, and/or that
the IP-based core network (40) comprises a plurality of second network nodes (80, 90) each associated with a second base station (32, 33), and **in that** the second firewall (120) is associated with the plurality of second network nodes (80, 90), wherein the second network nodes (80, 90) are each configured to forward data packets to the second firewall (120).

12. The data communication system according to any one of claims 8 to 11,
**characterized in that**
the IP-based tunnel protocol is a GPRS tunnel protocol (GTP),
**in that** the data link information is GTP context information, **in that** the first network node (70), the second network node (80), and the destination network node (140) are each formed as a GPRS (General Packet Radio Service)-capable network node, and **in that** the
first and second firewalls (110, 120) are each formed as a GTP firewall.

13. The data communication system according to claim 12,
**characterized in that** said
first and second network nodes (70, 80) are each formed as a SGSN (Serving GPRS Support Node) network node and said destination network node (140) is formed as a GGSN (Gateway GPRS Support Node) network node, or **in that** the first and second network nodes (70, 80) are each designed as an S-GW (Serving Gateway) network node or as an MME (Mobility Management Entity) network node and the destination network node (110, 120) is designed as a P-GW (Packet Data Network Gateway) network node.

14. The data communication system according to any of claims 8 to 13,
**characterized in that**
the data connection information includes an access point name (APN) and/or the type of a wireless access technology (RAT: Radio Access Technology) and/or an international mobile subscriber identity (IMSI) and/or a mobile subscriber integrated services digital network number (MSISDN).

15. The data communication system according to any one of claims 8 to 14,
**characterized in that**
the at least one mobile terminal is designed for wireless data transmission, wherein the mobile terminal is implemented in a motor vehicle, or is a sensor, or is a mobile radio telephone, or is a portable computer, and **in that** the destination device (50, 51) is a packet data network or a computer of a packet data network or a computer.

## Revendications

1. Procédé de synchronisation sélective d'informations de connexion de données entre des pare-feu (110-130) d'un réseau central par IP (40) d'un réseau de téléphonie mobile (160), dans lequel le réseau de téléphonique mobile (160) est réalisé pour transmettre des paquets de données selon un protocole de tunnelisation par IP, avec des étapes de procédé qui suivent :
a) d'établissement, en amorçant un terminal mobile (20), d'une connexion de données par l'intermédiaire du réseau de téléphonie mobile (160) en utilisant le protocole de tunnelisation par IP avec un dispositif ciblé (50, 51), dans lequel l'établissement de la connexion de données comprend des étapes suivantes :
a1) d'établissement d'une connexion de tunnelisation par IP d'un premier noeud de réseau (70) du réseau central par IP (40), lequel est associé actuellement au terminal mobile (20), par l'intermédiaire d'un premier pare-feu (110) associé au premier noeud de réseau (70) avec un noeud de réseau ciblé (140) du réseau central par IP (40), lequel peut être connecté au dispositif ciblé (50, 51), dans lequel le premier noeud de réseau (70) est associé à une première station de base (31) du réseau de téléphonie mobile (160),
a2) d'association d'un identifiant clair de tunnelisation de la connexion de tunnelisation par IP ;
a3) de mémorisation d'une information de connexion de données, laquelle contient l'identifiant de tunnelisation associé dans l'étape a2) à la connexion de tunnelisation par IP, dans le terminal mobile (20) et le premier pare-feu (110) ;
b) de transmission par l'intermédiaire de la connexion de données établie dans l'étape a) d'au moins un premier paquet de données, lequel contient l'identifiant de tunnelisation associé dans l'étape a2), du terminal mobile (20) par l'intermédiaire du premier noeud de réseau (70) au pare-feu (110) ;
c) d'examen du premier paquet de données, par le premier pare-feu (110), à l'aide de l'information de connexion de données mémorisée dans l'étape a3), laquelle contient l'identifiant de tunnelisation transmis dans le premier paquet de données ;
d) de transfert du premier paquet de données par l'intermédiaire de la connexion de données établie dans l'étape a) du premier pare-feu (110) au noeud de réseau ciblé (140) seulement lorsque l'autorisation pour le transfert a été constatée dans l'étape c) ;
e) de remise, en réponse à un événement prédéfini, de la connexion de données établie dans l'étape a) par le premier noeud de réseau (70) à un deuxième noeud de réseau (80), associé à un deuxième pare-feu (120), du réseau central par IP (40), dans lequel le deuxième noeud de réseau (80) est associé à une deuxième station de base (32) du réseau de téléphonie mobile (160).
f) de transmission par l'intermédiaire de la connexion de données remise dans l'étape e), d'au moins un deuxième paquet de données, lequel contient l'identifiant de tunnelisation associé dans l'étape a2), du terminal mobile (20) par l'intermédiaire du deuxième noeud de réseau (80) au deuxième pare-feu (120) ;
g) de vérification, dans le deuxième pare-feu (10), si l'identifiant de tunnelisation contenu dans le deuxième paquet de données est mémorisé dans le deuxième pare-feu (120) ;
h) dans le cas contraire, de mémorisation temporaire du deuxième paquet de données dans le deuxième pare-feu (120) et de transmission d'un message de demande pour demander l'identifiant de tunnelisation contenu dans le deuxième paquet de données du deuxième pare-feu (120) au premier pare-feu (110) ;
i) de transmission de l'information de connexion de données, laquelle contient l'identifiant de tunnelisation demandé, du premier pare-feu (110) au deuxième pare-feu (120) ;
j) d'examen du deuxième paquet de données, par le deuxième pare-feu (120), à l'aide de l'information de connexion de données reçue dans l'étape i) ; et
k) de transfert du deuxième paquet de données par l'intermédiaire de la connexion de données remise dans l'étape e), du deuxième pare-feu (120) au noeud de réseau ciblé (140) seulement lorsque l'autorisation pour le transfert est constatée dans l'étape j).

2. Procédé selon la revendication 1,
**caractérisé en ce que**
après l'exécution de l'étape i), l'information de connexion de données transmise est mémorisée dans le deuxième pare-feu (120) et l'information de connexion de données mémorisée dans le premier pare-feu (110), laquelle coïncide avec l'information de connexion de données transmise, est supprimée.

3. Procédé selon la revendication 1 ou 2,
**caractérisé en ce que**
le réseau central par IP (40) du réseau de téléphonie mobile (160) présente au moins un troisième noeud de réseau (100), lequel est associé à une troisième station de base (34) du réseau de téléphonie mobile (160), et au moins un troisième pare-feu (130), lequel est associé à l'au moins un troisième noeud de réseau (100), que
l'étape h) comprend l'étape de la transmission d'un message de demande pour demander l'identifiant de tunnelisation contenu dans le deuxième paquet de données depuis le deuxième pare-feu (120) au premier pare-feu (110) et à l'au moins un troisième pare-feu (130), et que
le premier pare-feu (110) et l'au moins un troisième pare-feu (130) vérifient respectivement en réponse au message de demande s'ils mémorisent l'information de connexion de données, laquelle contient l'identifiant de tunnelisation demandé.

4. Procédé selon l'une quelconque des revendications précédentes,
**caractérisée en ce que**
les étapes a) à k) sont répétées pour au moins un autre terminal mobile.

5. Procédé selon l'une quelconque des revendications précédentes,
**caractérisé en ce que**
le protocole de tunnelisation par IP est un protocole de tunnelisation GPRS (GTP),
que les informations de connexion de données sont des informations contextuelles GTP, que le premier noeud de réseau (70), le deuxième noeud de réseau (80) et le noeud de réseau ciblé (140) sont réalisés respectivement en tant qu'un noeud de réseau compatible avec le GPRS (General Packet Radio Service), que
dans l'étape a), la connexion de tunnelisation par IP est établie selon le protocole de tunnelisation GPRS, et que
le premier et le deuxième pare-feu (110, 120) sont réalisés respectivement en tant qu'un pare-feu compatible avec le GTP.

6. Procédé selon la revendication 5,
**caractérisé en ce que**
le premier et le deuxième noeud de réseau (70, 80) sont réalisés respectivement en tant que noeuds de réseau SGSN (Serving GPRS Support Node) et le noeud de réseau ciblé (140) est réalisé en tant que noeud de réseau GGSN (Gateway GPRS Support Node), ou que le premier et le deuxième noeud de réseau (70, 80) sont réalisés respectivement en tant que noeuds de réseau S-GW (Serving Gateway) ou en tant que noeuds de réseau MME (Mobility Management Entity) et le noeud de réseau ciblé (140) est réalisé en tant que noeud de réseau P-GW (Packet Data Network Gateway).

7. Procédé selon l'une quelconque des revendications précédentes,
**caractérisé en ce que**
l'information de connexion de données mémorisée dans l'étape a3) contient en supplément un nom de point d'accès (APN : Access Point Name) et/ou le type d'une technologie d'accès sans fil (RAT : Radio Access Technology] et/ou un identifiant d'abonné de téléphonie mobile international (IMSI : International Mobile Subscriber Identity) et/ou un numéro d'appel de téléphonie mobile (MSISDN : Mobile Subscriber Integrated Services Digital Network Number).

8. Système de communication de données (10) comprenant :
- un réseau de téléphonie mobile (160), lequel présente un réseau central par IP (40), dans lequel le réseau central par IP (40) présente un premier noeud de réseau (70), lequel est associé à une première station de base (31), un deuxième noeud de réseau (80), lequel est associé à une deuxième station de base (32), un premier pare-feu (110), lequel est associé au premier noeud de réseau (70), un deuxième pare-feu (120), qui est associé au deuxième noeud de réseau (80), et au moins un noeud de réseau ciblé (140), qui peut être connecté à un dispositif ciblé (50, 51), dans lequel le système de communication de données (10) est réalisé pour transmettre des paquets de données selon un protocole de tunnelisation par IP, et
- au moins un terminal mobile (20), lequel présente un dispositif de commande (21) et un dispositif de mémorisation (22), dans lequel au moins une information (IMSI, MSISDN) destinée à identifier le terminal mobile (20) et au moins une information (APN) destinée à identifier l'au moins un noeud de réseau ciblé (140) ainsi que le protocole de tunnelisation par IP sont mémorisés,
dans lequel le dispositif de commande (21) du terminal mobile (20) est réalisé
pour amener le terminal mobile (20), en exécutant le protocole de tunnelisation par IP et en utilisant l'information destinée à identifier le noeud de réseau ciblé (140), à initier l'établissement d'une connexion de données par l'intermédiaire du réseau de téléphonie mobile avec un dispositif ciblé (50, 51), dans lequel l'établissement de la connexion de données comprend l'établissement d'une connexion de tunnelisation par IP par le premier noeud de réseau (70) du réseau central par IP (40), lequel est associé actuellement au terminal mobile (20), par l'intermédiaire du premier pare-feu (110) avec le noeud de réseau ciblé (140) du réseau central par IP (40), dans lequel
le réseau central par IP (40) est réalisé pour associer à la connexion de tunnelisation par IP un identifiant clair de tunnelisation et pour déclencher la mémorisation d'une information de connexion de données, laquelle contient l'identifiant de tunnelisation associé à la connexion de tunnelisation par IP, dans le terminal mobile (20) et le premier pare-feu (110),
dans lequel le dispositif de commande (21) du terminal mobile (20) est réalisé pour amener le terminal mobile (20) à générer au moins un premier paquet de données, lequel contient l'identifiant de tunnelisation mémorisé, dans lequel la transmission du premier paquet de données est effectuée par l'intermédiaire de la connexion de données établie et le premier noeud de réseau (70) avec le premier pare-feu (110), dans lequel le premier pare-feu (110) est réalisé pour examiner le premier paquet de données à l'aide de l'information de connexion de données mémorisée, laquelle contient l'identifiant de tunnelisation transmis dans le premier paquet de données et pour transférer le premier paquet de données par l'intermédiaire d'une connexion de données établie au noeud de réseau ciblé (140) seulement lorsque l'examen du premier paquet de données a donné lieu à l'autorisation du transfert, dans lequel
le réseau de téléphonie mobile (160) est réalisé pour remettre au deuxième noeud de réseau (80), en réponse à un événement prédéfini, la connexion de données existante entre le terminal mobile (20) et le dispositif ciblé (50, 51) provenant du premier noeud de réseau (70), dans lequel
le dispositif de commande (21) du terminal mobile (20) est réalisé pour amener le terminal mobile (20) à générer au moins un deuxième paquet de données, lequel contient l'identifiant de tunnelisation mémorisé, dans lequel la transmission du deuxième paquet de données est effectuée par l'intermédiaire de la connexion de données remise et le deuxième noeud de réseau (80) au deuxième pare-feu (120), dans lequel le deuxième pare-feu (120) est réalisé
- pour vérifier si l'identifiant de tunnelisation contenu dans le deuxième paquet de données est mémorisé dans le deuxième pare-feu (120), et
- dans le cas contraire, pour mémoriser de manière temporaire le deuxième paquet de données et pour transmettre un message de demande pour demander l'identifiant de tunnelisation contenu dans le deuxième paquet de données au premier pare-feu (110), dans lequel
le premier pare-feu (110) est réalisé pour transmettre, en réponse au message de demande, l'information de connexion de données, lequel contient l'identifiant de tunnelisation demandé, au deuxième pare-feu (120),
dans lequel
le deuxième pare-feu (120) est réalisé pour examiner le deuxième paquet de données à l'aide de l'information de connexion de données reçue et pour ne transmettre le deuxième paquet de données par l'intermédiaire de la connexion de données établie au noeud de réseau ciblé (140) que lorsque l'examen du deuxième paquet de données a donné lieu à l'autorisation du transfert.

9. Système de communication de données selon la revendication 8,
**caractérisé en ce que**
le deuxième pare-feu (120) est réalisé pour mémoriser l'information de connexion de données reçue du premier pare-feu (110), et que
le premier pare-feu (110) est réalisé pour supprimer l'information de connexion de données mémorisée, laquelle coïncide avec l'information de connexion de données transmise.

10. Système de communication de données selon la revendication 8 ou 9,
**caractérisé en ce que**
le réseau central par IP (40) présente au moins un troisième noeud de réseau (100), lequel est associé à une troisième station de base (34) du réseau de téléphonie mobile (160), et au moins un troisième pare-feu (130), lequel est associé à l'au moins un troisième noeud de réseau (100), que
le deuxième pare-feu (120) est réalisé pour transmettre un message de demande destiné à demander l'identifiant de tunnelisation contenu dans le deuxième paquet de données au premier pare-feu (110) et à l'au moins un troisième pare-feu (130), et que
le premier pare-feu (110) et l'au moins un troisième pare-feu (130) sont réalisés respectivement pour vérifier, en réponse au message de demande, si l'information de connexion de données, laquelle contient l'identifiant de tunnelisation demandé, est mémorisée dans le premier pare-feu (110) ou l'au moins un troisième pare-feu (130).

11. Système de communication de données selon l'une quelconque des revendications 8 à 10,
**caractérisé en ce que**
le réseau central par IP (40) présente plusieurs premiers noeuds de réseau associés respectivement à une première station de base, que
le premier pare-feu est associé aux plusieurs premiers noeuds de réseau, dans lequel les premiers noeuds de réseau sont respectivement réalisés pour transférer des paquets de données au premier pare-feu, et/ou que
le réseau central par IP (40) présente plusieurs deuxièmes noeuds de réseau (80, 90) associés respectivement à une deuxième station de base (32, 33), et que
le deuxième pare-feu (120) est associé aux plusieurs deuxièmes noeuds de réseau (80, 90), dans lequel les deuxièmes noeuds de réseau (80, 90) sont réalisés respectivement pour transférer des paquets de données au deuxième pare-feu (120) .

12. Système de communication de données selon l'une quelconque des revendications 8 à 11,
**caractérisé en ce que**
le protocole de tunnelisation par IP est un protocole de tunnelisation GPRS (GTP),
que les informations de connexion de données sont des informations contextuelles GTP, que le premier noeud de réseau (70), le deuxième noeud de réseau (80) et le noeud de réseau ciblé (140) sont réalisés respectivement en tant qu'un noeud de réseau compatible avec le GPRS, et que
le premier et le deuxième pare-feu (110, 120) sont réalisés respectivement en tant qu'un pare-feu GTP.

13. Système de communication de données selon la revendication 12,
**caractérisé en ce que**
le premier et le deuxième noeud de réseau (70, 80) sont réalisés respectivement en tant que noeuds de réseau SGSN et le noeud de réseau ciblé (140) est réalisé en tant qu'un noeud de réseau GGSN, ou que le premier et le deuxième noeud de réseau (70, 80) sont réalisés respectivement en tant que noeuds de réseau S-GW ou en tant que noeuds de réseau MME, et le noeud de réseau ciblé (110, 120) est réalisé en tant que noeud de réseau P-GW.

14. Système de communication de données selon l'une quelconque des revendications 8 à 13,
**caractérisé en ce que**
l'information de connexion de données contient un nom de point d'accès (APN) et/ou le type d'une technologie d'accès sans fil (RAT) et/ou un identifiant d'abonné de téléphonie mobile international (IMSI) et/ou un numéro d'appel de téléphonie mobile (MSISDN).

15. Système de communication de données selon l'une quelconque des revendications 8 à 14,
**caractérisé en ce que**
l'au moins un terminal mobile est réalisé pour la transmission de données sans fil, dans lequel le terminal mobile est implémenté dans un véhicule à moteur, ou un capteur, ou un téléphone mobile, ou un ordinateur portable, et que
le dispositif ciblé (50, 51) est un réseau de données par paquets ou un ordinateur d'un réseau de données par paquets ou un ordinateur.
